# EUROPEAN PATENT SPECIFICATION

(11) **EP 4 385 745 B1**
(45) Date of publication and mention of the grant of the patent: **15.10.2025**
(21) Application number: 22864158.5
(22) Date of filing: 03.08.2022
(51) Int. Cl.: B41J 2/525, B41F 17/22, B41J 2/01, B41J 3/407, B41M 3/00, G06K 15/10, G06K 15/02, B41J 3/413, H04N 1/60, B41F 19/00, B41F 33/00, B41F 5/20, B41F 7/18, B41F 9/04, B41F 33/16

(54) **CAN MANUFACTURING METHOD AND CAN MANUFACTURING SYSTEM**
DOSENHERSTELLUNGSVERFAHREN UND DOSENHERSTELLUNGSSYSTEM
PROCÉDÉ DE FABRICATION DE CANETTE ET SYSTÈME DE FABRICATION DE CANETTE

(30) Priority: 31.08.2021 JP 2021141748
(43) Date of publication of application: 19.06.2024
(73) Proprietor: Toyo Seikan Co., Ltd., Tokyo 141-8640 (JP)
(72) Inventor: SAKAMAKI Miyuki, Yokohama-shi, Kanagawa 230-0001 (JP); NAGATSUKA Ryota, Yokohama-shi, Kanagawa 230-0001 (JP); SAITO Yukiko, Yokohama-shi, Kanagawa 230-0001 (JP)
(74) Representative: Pfenning, Meinig & Partner mbB
(86) International application number: PCT/JP2022/029756
(87) International publication number: WO 2023/032572

(56) References cited:
- JP-A- 2001 272 276
- JP-A- 2002 307 643
- JP-A- 2014 236 434
- JP-A- 2018 160 895
- JP-A- 2019 155 771
- JP-A- 2020 001 197

## Description

### BACKGROUND

### 1. TECHNICAL FIELD

The present invention relates to a can manufacturing method and can manufacturing system.

### 2. RELATED ART

A can manufacturing method is known in which a predetermined image is printed on a surface of a cylindrical wall of a can (for example, see Patent document 1-2).

### Prior Art Document

### Patent Document

Patent Document 1: Japanese Patent Application Publication No. 2019-81555
Patent Document 2: Japanese Patent Application Publication No. 2012-106758
JP2019155771A discloses a connection structure between sensor and cable includes a cable formed by assembling a plurality of electric wires each including a covering portion covering a core and a core-exposing portion exposing the core at an end of the covering portion, a spacer that is interposed in a space surrounded by the covering portions of the electric wires and holds end portions of the covering portions in the state that the end portions are spaced from each other, and a sensor that detects a physical quantity, and the core-exposing portion of each of the electric wires of the cable is electrically connected to the sensor via a fixing member in the state that each of the electric wires is held by the spacer.
JP2014236434A discloses an image processing apparatus comprising color correction means for correcting a color signal of an input image; binarization means for converting the color signal of the input image to a binary color signal recordable by a first image recording apparatus; and color conversion means for converting the binary color signal obtained by the correction by the correction means and the conversion by the binarization means, to a color signal for a second image recording apparatus.
JP2001272276A discloses: In this color sample book system, color samples 4a printed with four color separation on a transparent or a semitransparent sheet to form a color sample sheet. JP2020001197A discloses a color sample book system, whereby the sense of printing colors to transparent or semitransparent products can be obtained directly as chromaticity when printed, thereby eliminating color matching and forming samples many times as in prior art. JP2018160895A discloses a manufacturing method of filling printed can good in design, by printing an inkjet image on a filling can in which contents are filled and sealed.

The invention is defined in the appended set of claims. The can manufacturing method may comprise creating separation data by separating platemaking editing data for each ink color of a printing machine that performs printing on a surface of a can; and manufacturing a proof can by outputting an image corresponding to the platemaking editing data by an ink-jet printer based on the platemaking editing data or the separation data and a predetermined conversion rule, and arranging the image on a can surface. The conversion rule may have a rule to reproduce, by ink of the ink-jet printer, the ink color of the printing machine printed based on the separation data.

The manufacturing a proof can may be manufacturing a proof can by outputting the image corresponding to the platemaking editing data by the ink-jet printer based on the separation data and the conversion rule, and arranging the image on the can surface.

The conversion rule may be a rule to convert a color of separation color data which is color data of the ink color of the printing machine into a color of IJ color data which is color data of an ink color of the ink-jet printer.

The separation color data may include a first association between the ink color of the printing machine and color coordinates in a color space of a color of a printed material printed in the ink color of the printing machine. The IJ color data may include a second association between the ink color of the ink-jet printer and color coordinates in a color space of a color of a printed material printed in the ink color of the ink-jet printer. The can manufacturing method may further comprise generating the conversion rule based on the separation color data and the IJ color data.

The can manufacturing method may further comprise correcting the conversion rule. The correcting the conversion rule may measure a color value of a color sample that consists of a color patch obtained by printing, on a metal material by the printing machine, the ink color of the printing machine according to a color of the separation color data. The correcting the conversion rule may measure a color value of an IJP color chart obtained by converting a color of the separation color data into a color of the IJ color data according to the conversion rule, printing, on a transparency film by the ink-jet printer, the ink color of the ink-jet printer corresponding to the color of the IJ color data, and superposing, on a metal material, the transparency film after printing. If a difference between the color value of the color sample and the color value of the IJP color chart is greater than a predetermined value, the correcting the conversion rule may correct the conversion rule so that the difference in the color values becomes equal to or less than the predetermined value.

The manufacturing the proof can may be manufacturing the proof can by outputting the image corresponding to the platemaking editing data by the ink-jet printer based on the platemaking editing data and the conversion rule, and arranging the image on the can surface.

The conversion rule may be a rule to convert a color of platemaking editing color data which is color data of an ink color of the platemaking editing data into a color of IJ color data which is color data of an ink color of the ink-jet printer.

The platemaking editing color data may include a third association between the ink color of the platemaking editing data and color coordinates in a color space of a color of a printed material printed in the ink color of the printing machine based on the separation data. The IJ color data may include a fourth association between the ink color of the ink-jet printer and color coordinates in a color space of a color of a printed material printed in the ink color of the ink-jet printer. The can manufacturing method may further comprise generating the conversion rule based on the platemaking editing color data and the IJ color data.

The can manufacturing method may further comprise correcting the conversion rule. The correcting the conversion rule may measure a color value of a color sample that consists of a color patch obtained by printing, on a metal material by the printing machine, the ink color of the printing machine. The correcting the conversion rule may measure a color value of an IJP color chart obtained by converting a color of the platemaking editing color data into a color of the IJ color data according to the conversion rule, printing, on a transparency film by the ink-jet printer, the ink color of the ink-jet printer corresponding to the color of the IJ color data, and superposing, on a metal material, the transparency film after printing. If a difference between the color value of the color sample and the color value of the IJP color chart is greater than a predetermined value, the correcting the conversion rule may correct the conversion rule so that the difference in the color values becomes equal to or less than the predetermined value.

The separation data may include data for spot color plates to be used in spot color printing. The separation data may include data for process color plates to be used in process color printing.

The proof can may include an image that is printed directly on a can surface by the ink-jet printer and that corresponds to the platemaking editing data. The proof can may have the film arranged on its can surface, on which the image that is printed by the ink-jet printer and that corresponds to the platemaking editing data is formed.

The can manufacturing method may further comprise creating the platemaking editing data from an image data.

The image data may include a color selected from a color sample showing the ink color of the printing machine. The color sample may be a color sample that is printed on a metal plate to be used for the can.

The can manufacturing method may further comprise proofing the platemaking editing data using the proof can. The can manufacturing method may further comprise proofing the platemaking editing data using the proof can, wherein the proofing may include comparing the color sample of the color selected on the image data with a color on the proof can.

A can manufacturing system may comprise a printing machine which performs printing on a surface of a can; a separation data creation unit which creates separation data by separating platemaking editing data for each ink color of the printing machine; an ink-jet printer which outputs an image corresponding to the platemaking editing data based on the platemaking editing data or the separation data and a predetermined conversion rule to manufacture a proof can on which the image is arranged on a can surface. The conversion rule may have a rule to reproduce, by ink of the ink-jet printer, the ink color of the printing machine printed based on the separation data.

The ink-jet printer may output an image corresponding to the platemaking editing data based on the separation data and the conversion rule.

The conversion rule may be a rule to convert a color of separation color data which is color data of the ink color of the printing machine into a color of IJ color data which is color data of an ink color of the ink-jet printer.

The separation color data may include a first association between the ink color of the printing machine and color coordinates in a color space of a color of a printed material printed in the ink color of the printing machine. The IJ color data may include a second association between the ink color of the ink-jet printer and color coordinates in a color space of a color of a printed material printed in the ink color of the ink-jet printer. The can manufacturing system may further comprise a conversion rule generation unit which generates the conversion rule based on the separation color data and the IJ color data.

The can manufacturing system may comprise a color sample that consists of a color patch obtained by printing, on a metal material by the printing machine, the ink color of the printing machine according to a color of the separation color data. The can manufacturing system may comprise an IJP color chart obtained by converting a color of the separation color data into a color of the IJ color data according to the conversion rule, printing, on a transparency film by the ink-jet printer, the ink color of the ink-jet printer corresponding to the color of the IJ color data, and superposing, on a metal material, the transparency film after printing. The can manufacturing system may further comprise a conversion rule correction unit which measures a color value of the color sample and a color value of the IJP color chart, and if a difference between the color value of the color sample and the color value of the IJP color chart is greater than a predetermined value, corrects the conversion rule so that the difference in the color values becomes equal to or less than the predetermined value.

The ink-jet printer may output an image corresponding to the platemaking editing data based on the platemaking editing data and the conversion rule.

The conversion rule may be a rule to convert a color of platemaking editing color data which is color data of an ink color of the platemaking editing data into a color of IJ color data which is color data of an ink color of the ink-jet printer.

The platemaking editing color data may include a third association between the ink color of the platemaking editing data and color coordinates in a color space of a color of a printed material printed in the ink color of the printing machine based on the separation data. The IJ color data may include a fourth association between the ink color of the ink-jet printer and color coordinates in a color space of a color of a printed material printed in the ink color of the ink-jet printer. The can manufacturing system may further comprise a conversion rule generation unit which generates the conversion rule based on the platemaking editing color data and the IJ color data.

The can manufacturing system may comprise a color sample that consists of a color patch obtained by printing, on a metal material by the printing machine, the ink color of the printing machine. The can manufacturing system may comprise an IJP color chart obtained by converting a color of the platemaking editing color data into a color of the IJ color data according to the conversion rule, printing, on a transparency film by the ink-jet printer, the ink color of the ink-jet printer corresponding to the color of the IJ color data, and superposing, on a metal material, the transparency film after printing. The can manufacturing system may further comprise a conversion rule correction unit which measures a color value of the color sample and a color value of the IJP color chart, and if a difference between the color value of the color sample and the color value of the IJP color chart is greater than a predetermined value, corrects the conversion rule so that the difference in the color values becomes equal to or less than the predetermined value.

The separation data may include data for spot color plates to be used in spot color printing. The separation data may include data for process color plates to be used in process color printing.

The ink-jet printer may print the image corresponding to the platemaking editing data directly on a can surface. The ink-jet printer may print the image corresponding to the platemaking editing data on a film.

The can manufacturing system may further comprise an platemaking editing data creation unit which creates the platemaking editing data from an image data.

The can manufacturing system may further comprise a color sample that shows the ink color of the printing machine. The color sample may be a color sample that is printed on a metal plate to be used for the can. The image data may include a color selected from the color sample.

Note that the above summary clause does not necessarily describe all necessary features of the embodiments of the present invention. In addition, the present invention may also be a sub-combination of the features described above.

### BRIEF DESCRIPTION OF THE DRAWINGS

Fig. 1 shows an example of a can manufacturing system 100 in the present embodiment.
Fig. 2 shows an example of data processing according to the can manufacturing system 100 in the present embodiment.
Fig. 3 shows a specific example of data processing by a conversion rule generation unit 40 and a conversion rule correction unit 50 in the embodiment shown in Fig. 2.
Fig. 4 shows an example of data processing according to the can manufacturing system 100 in the present embodiment.
Fig. 5 shows a specific example of data processing by the conversion rule generation unit 40 and the conversion rule correction unit 50 in the embodiment shown in Fig. 4.
Fig. 6 shows an example of a manufacturing flow of a can manufacturing method in the present embodiment.
Fig. 7 shows a specific example of a can proofing step in the can manufacturing method of the present embodiment.
Fig. 8 shows a specific example of a can proofing step in the can manufacturing method of the present embodiment.
Fig. 9 shows an example of a generation flow of the conversion rule in the can manufacturing method of the present embodiment.
Fig. 10A shows a specific example of the first association in the can manufacturing method of the present embodiment.
Fig. 10B shows a specific example of the second association in the can manufacturing method of the present embodiment.
Fig. 11 shows an example of a correction flow of the conversion rule in the can manufacturing method of the present embodiment.
Fig. 12 shows a variation of the manufacturing flow of the can manufacturing method in the present embodiment.
Fig. 13 shows an example of the generation flow of the conversion rule in the can manufacturing method of the present embodiment.
Fig. 14A shows a specific example of the third association in the can manufacturing method of the present embodiment.
Fig. 14B shows a specific example of the fourth association in the can manufacturing method of the present embodiment.
Fig. 15 shows an example of a correction flow of the conversion rule in the can manufacturing method of the present embodiment.
Fig. 16 shows an example of a computer 2200 in which a plurality of embodiments according to the present invention may be entirely or partially embodied.

### DESCRIPTION OF EXEMPLARY EMBODIMENTS

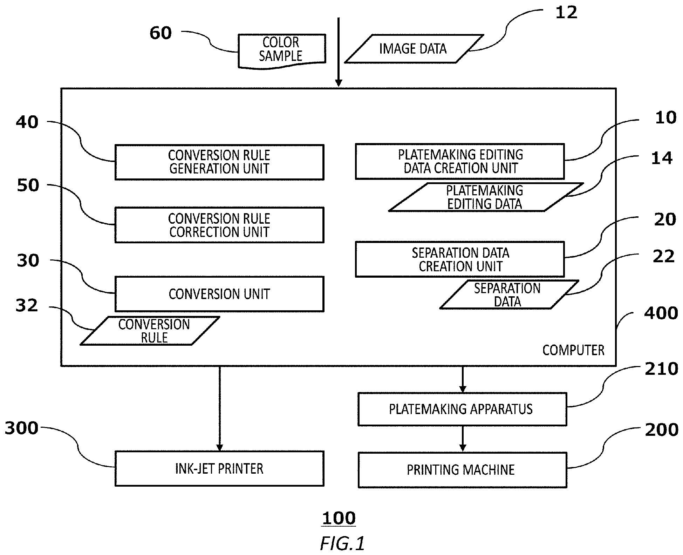

Fig. 1 shows an example of a can manufacturing system 100 in the present embodiment. The can manufacturing system 100 manufactures a can having printing of an image performed on its surface. The can manufacturing system 100 may include a printing machine 200, an ink-jet printer 300, and a computer 400.

The printing machine 200 prints an image on the surface of the can. The printing machine 200 may be a plate-based printing machinery that performs printing using printing plates, such as a gravure printing machinery, a flexo printing machinery, or an offset printing machinery. The printing machine 200 may perform printing using process color ink, such as cyan (C), magenta (M), yellow (Y), and black (K), and/or spot color ink other than the process colors.

The can manufacturing system 100 may further include a platemaking apparatus 210. The platemaking apparatus 210 makes printing plates to be used in the printing machine 200. The platemaking apparatus 210 may be an apparatus that makes plates by means of DTP (Desktop Publishing), CTP (Computer To Plate), or the like.

A can body of a can manufactured by the can manufacturing system 100 in the present embodiment may be made of aluminum or may be made of steel. Also, the can may be a 2-piece can, a 3-piece can, or a bottle can. The shape of the can may be cylindrical or may be square. Contents filled in the can may be a beverage, food, cosmetics, detergent, medicinal product, or the like.

The ink-jet printer 300 prints an image to be formed on a surface of a proof can by an ink-jet process. The ink-jet printer 300 discharges ink such as cyan, magenta, yellow, black or the like to output the image. The ink-jet printer 300 may use ink colors other than these. For example, ink colors such as white, light cyan, vivid magenta, vivid light magenta, orange, green, or the like may further be used.

The ink-jet printer 300 may print the image directly on the can surface. In this case, the can that has the image on its surface printed by the ink-jet printer 300 can be defined as a proof can for use in print-proofing of the printing machine 200. Alternatively, the ink-jet printer 300 may print the image on a film. In this case, a proof can can be manufactured by arranging, on a can surface, the film on which the image printed by the ink-jet printer 300 is formed.

The can body of the proof can may be made of aluminum or may be made of steel. In addition, it may be a 2-piece can, 3-piece can, or a bottle can. The shape of the can may be cylindrical or may be square. The material and shape of the proof can may be the same as the can manufactured by the can manufacturing system according to the present embodiment.

The film may be a polyester film such as a PET film, a vinyl chloride film, a polystyrene film, a polyvinylidene chloride film, a polyethylene film, or a polypropylene film. The thickness of the film may range from 10 µm to 500 µm.

The computer 400 generates data for the platemaking apparatus 210 to perform platemaking and data for the ink-jet printer 300 to perform printing, and provides these pieces of data to the platemaking apparatus 210 and the ink-jet printer 300. The computer 400 may include an platemaking editing data creation unit 10, a separation data creation unit 20, a conversion unit 30, a conversion rule generation unit 40, and a conversion rule correction unit 50.

The platemaking editing data creation unit 10 creates platemaking editing data 14 from image data 12. Image data 12 is the original data of the image to be printed on the can by the printing machine 200. The platemaking editing data creation unit 10 may perform editing tasks such as layout and color tone compensation on the image data 12 to create the platemaking editing data 14.

The separation data creation unit 20 creates separation data 22 in which the platemaking editing data 14 is separated for each ink color of the printing machine 200. The separation data creation unit 20 may decompose the platemaking editing data 14 according to plates (that is, the ink colors) to be used in the printing machine 200, and create separation data 22 indicating a pattern of ink for each plate. In addition, here the separation data 22 may be created by performing halftone screening to represent the light and shade of each ink color by a collection of halftone dots, on the pattern of ink for each plate.

The separation data 22 may include data for spot color plates to be used in spot color printing. The separation data 22 may include data for process color plates to be used in process color printing. Alternatively, the separation data 22 may include data for spot color plates and data for process color plates.

The conversion unit 30 converts the platemaking editing data 14 and/or the separation data 22 created for printing the image by the printing machine 200 into data that can be output by the ink-jet printer 300. The conversion unit 30 may convert the platemaking editing data 14 and/or the separation data 22 based on the conversion rule 32.

The conversion rule 32 may include a rule to reproduce, by the ink of the ink-jet printer 300, the ink colors of the printing machine 200 printed based on the separation data 22. Accordingly, the can manufacturing system 100 of the present embodiment can reproduce, in the image arranged on the surface of the proof can, the ink colors of the image printed on the can surface by the printing machine 200.

The conversion rule generation unit 40 generates the conversion rule 32. In addition, the conversion rule correction unit 50 corrects the generated conversion rule 32.

The platemaking editing data creation unit 10, the separation data creation unit 20, the conversion unit 30, the conversion rule generation unit 40, and the conversion rule correction unit 50 may be provided in one computer 400, or each function may be separately provided in a plurality of computers 400.

With the can manufacturing system 100 of the present embodiment, it is possible to manufacture, by using the ink-jet printer 300, a proof can in which the ink colors of the image printed on the can surface by the printing machine 200 are reproduced. In addition, a proofing procedure which involves the ink-jet printer 300 can significantly reduce the time required for proofing of printed cans compared to the conventional can manufacturing method in which a proof can is manufactured by printing machinery using printing plates. Accordingly, the period from order placement to delivery of printed cans can be significantly reduced, allowing for manufacturing small lots and multiple varieties of printed cans.

The can manufacturing system 100 may further include a color sample 60 representing the ink colors of the printing machine 200. The color sample 60 may be a color sample that is printed on a metal plate for a can. The image data 12 may include colors selected from the color sample 60.

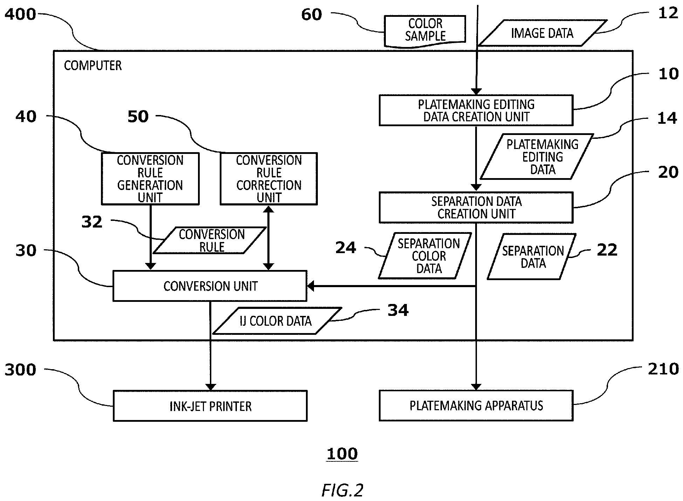

Fig. 2 shows an example of data processing according to the can manufacturing system 100 in the present embodiment.

In the can manufacturing system 100 shown in Fig. 2, firstly the image data 12 is input to the platemaking editing data creation unit 10. The platemaking editing data creation unit 10 creates the platemaking editing data 14 from the image data 12.

Then, the platemaking editing data creation unit 10 inputs the platemaking editing data 14 to the separation data creation unit 20. The separation data creation unit 20 creates the separation data 22 from the platemaking editing data 14.

The separation data creation unit 20 inputs the separation data 22 to the conversion unit 30. The conversion unit 30 acquires separation color data 24 which corresponds to the separation data 22 and which is color data of the ink colors used in the printing machine 200, (for example, it retrieves the data from a memory in which the separation color data 24 is stored in advance). The conversion unit 30 converts the separation data 22 into data that can be output by the ink-jet printer 300 (also referred to as "IJ print data)). In addition, according to the predetermined conversion rule 32, the conversion unit 30 converts the colors of the separation color data 24 into the colors of the IJ color data 34 which is color data of the ink colors of the ink-jet printer 300.

The conversion unit 30 outputs the IJ print data and the colors of the IJ color data 34 to the ink-jet printer 300. The ink-jet printer 300 outputs an image corresponding to the platemaking editing data 14 based on the separation data 22 and the conversion rule 32. The output image is arranged on the proof can, and the platemaking editing data 14 is proofed using the proof can.

The separation data creation unit 20 inputs the separation data 22 and the colors of the separation color data 24 into the platemaking apparatus 210. The platemaking apparatus 210 manufactures the plates based on the separation data 22. The plates manufactured are mounted on the printing machine 200 to print the image corresponding to the platemaking editing data 14.

By the data processing in the can manufacturing system 100 shown in Fig. 2, it is possible to manufacture a proof can in which the ink colors of the image printed on the can surface by the printing machine 200 are reproduced. In addition, since the conversion of the separation data 22 is performed to output the image to be arranged on the can surface of the proof can, it is possible to manufacture a proof can in which the shape and arrangement of the halftone dots represented on the plates of the printing machine 200 are reproduced.

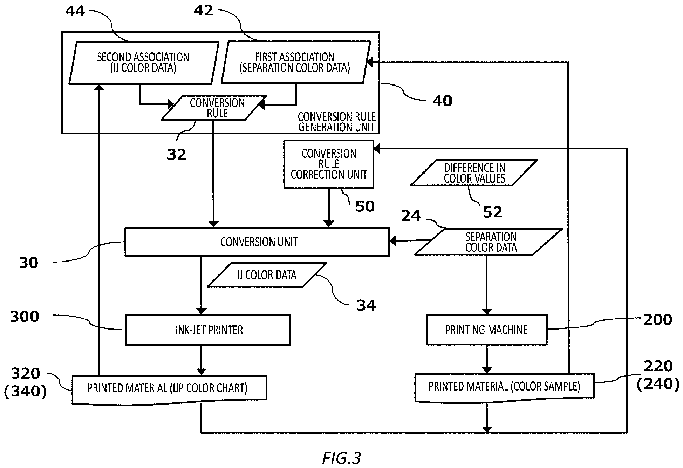

Fig. 3 shows a specific example of data processing by a conversion rule generation unit 40 and a conversion rule correction unit 50 in the embodiment shown in Fig. 2.

Firstly, the printing machine 200 prints the printed material 220 in the ink colors of the printing machine 200. Then, color coordinates in the color space of the colors of the printed material 220 are acquired by a colorimeter. In addition, the ink-jet printer 300 prints the printed material 320 in the ink colors of the ink-jet printer 300. Then, color coordinates in the color space of the colors of the printed material 320 are acquired by a colorimeter. The color coordinates may be represented by the values of CIE1976Lab color system specified by JISZ8781-4: 2013 or may be represented by the values of CIE1976Luv color system specified by JISZ8781-5: 2013.

Here, the printed material 220 may be the printed material 220 of a metal material on which the ink colors of the printing machine 200 are printed. The printed material 220 may be a color sample 240 consisting of color patches obtained by printing ink colors of the printing machine 200 on a metal material by the printing machine 200 (the printed material consisting of color patches of ink colors of the printing machine printed on the metal material by the printing machine may be referred to as "color sample"). The metal material may be aluminum or steel and may be the same material as the metal material of the can manufactured by the can manufacturing system of the present embodiment.

Also, the printed material 320 may be an IJP color chart 340 which is obtained by printing the ink colors of the ink-jet printer 300 on a transparency film and superposing the printed transparency film on a metal material (the printed material obtained by printing, by the ink-jet printer, the ink colors of the ink-jet printer on the transparency film and superposing the printed transparency film on the metal material may be referred to as "IJP color chart"). The transparency film may be a polyester film such as a PET film, a vinyl chloride film, a polystyrene film, a polyvinylidene chloride film, a polyethylene film, or a polypropylene film and may be a film made from the same material as those used to manufacture a proof can. Also, the printed material 320 may be the printed material 320 of a metal material on which ink colors of the ink-jet printer 300 are printed, and the above descriptions about the metal material may be applied to this metal material as they are.

The color coordinates in the color space of the colors of the printed material 220 and the color coordinates in the color space of the colors of the printed material 320 may be acquired by measuring the colors of the printed material by the colorimeter. To measure the colors on the color sample 240, the can may be cut open to be planar for color measurement. To measure the colors on the IJP color chart 340, color measurement may be performed on a metal material which is obtained by cutting open the can to be planar and on which the printed transparency film is superposed.

Then, the conversion rule generation unit 40 associates the ink colors of the printing machine 200 with the color coordinates in the color space of the colors of the printed material 220 to acquire separation color data 24 which includes the first association 42 between the ink colors of the printing machine 200 and the color coordinates in the color space of the colors of the printed material 220. Also, the conversion rule generation unit 40 associates the ink colors of the ink-jet printer 300 with the color coordinates in the color space of the colors of the printed material 320 to acquire IJ color data 34 which includes the second association 44 between the ink colors of the ink-jet printer 300 and the color coordinates in the color space of the colors of the printed material 320.

The conversion rule generation unit 40 generates a conversion rule 32 based on the separation color data 24 and the IJ color data 34. The conversion rule 32 may be generated so that the difference between a color value of the printed material 220 and a color value of the printed material 320 falls within a predetermined range. For example, the conversion rule 32 may be generated so that the color difference between the printed material 220 and the printed material 320 is ΔE₀₀ = 4 or less. Alternatively, the conversion rule 32 may be generated so that ΔE₀₀ = 3 or less is achieved. Here, ΔE₀₀ is an indicator of the color difference specified by JISZ 8781-6: 2017 and ISO/CIE11664-6: 2014 (E).

The conversion rule generation unit 40 inputs the generated conversion rule 32 to the conversion unit 30.

The printing machine 200 prints the ink colors of the printing machine 200 according to the separation color data 24 on the metal material to manufacture a color sample 240 consisting of the color patches. The metal material may be aluminum or steel and may be the same material as the metal material of the can manufactured by the can manufacturing system 100 of the present embodiment. Alternatively, the metal material may be the can itself.

In addition, the conversion unit 30 acquires the separation color data 24 and converts the colors of the separation color data 24 into the colors of the IJ color data 34 according to the conversion rule 32. The conversion unit 30 outputs the converted colors of the IJ color data 34 to the ink-jet printer 300.

The ink-jet printer 300 manufactures an IJP color chart 340 by printing, on a transparency film, the ink colors of the ink-jet printer 300 corresponding to the colors of the IJ color data 34 and superposing the printed transparency film on a metal material. The transparency film may be a polyester film such as a PET film, a vinyl chloride film, a polystyrene film, a polyvinylidene chloride film, a polyethylene film, or a polypropylene film and may be a film made from the same material as those used to manufacture a proof can. The thickness of the transparency film may range from 10 µm to 500 µm. Also, the metal material may be aluminum or steel and may be the same material as the metal material used to manufacture a proof can. Alternatively, the metal material may be the can itself.

Note that, the IJP color chart 340 may be the IJP color chart 340 obtained by printing the ink colors of the ink-jet printer 300 corresponding to the colors of the IJ color data 34 on a metal material by the ink-jet printer 300. For the metal material, the above descriptions may be applied as they are.

The conversion rule correction unit 50 acquires the difference 52 between the color values of the color sample 240 and the color values of the IJP color chart 340 measured by the colorimeter.

If the difference 52 in the color values is greater than a predetermined value, the conversion rule correction unit 50 corrects the conversion rule 32 so that the difference 52 in the color values becomes equal to or less than the predetermined value.

By the data processing shown in Fig. 3 according to the can manufacturing system 100, the conversion rule 32 with high reproducibility can be acquired based on the actual measured values even if the printing machine 200 and the ink-jet printer 300 each have different ink colors or different output characteristics or even if the metal materials and film materials of the printed can and proof can each represent the ink colors differently. Accordingly, it is possible to manufacture a proof can in which the ink colors of the image printed by the printing machine 200 on the can surface are represented with high reproducibility.

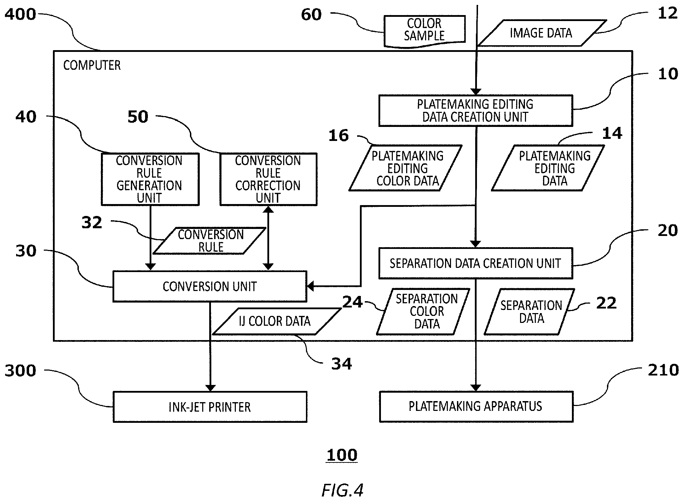

Fig. 4 shows an example of data processing according to the can manufacturing system 100 in the present embodiment. Although the examples of the embodiment shown in Figs. 4 - 5 are different from those of the embodiment shown in Figs. 2 - 3, some of the configurations in each embodiment may be extracted and combined.

In the can manufacturing system 100 shown in Fig. 4, firstly the image data 12 is input in the platemaking editing data creation unit 10. The platemaking editing data creation unit 10 creates the platemaking editing data 14 from the image data 12.

Then, the platemaking editing data creation unit 10 inputs the platemaking editing data 14 to the conversion unit 30. The conversion unit 30 acquires, from the platemaking editing data 14, platemaking editing color data 16 which is color data of the ink colors of the platemaking editing data 14. The conversion unit 30 converts the platemaking editing data 14 into the IJ print data. Also, the conversion unit 30 converts the colors of the platemaking editing color data 16 into the colors of the IJ color data 34 which is color data of the ink colors of the ink-jet printer 300 according to the predetermined conversion rule 32.

The conversion unit 30 outputs the IJ print data and the colors of the IJ color data 34 to the ink-jet printer 300. The ink-jet printer 300 outputs the image corresponding to the platemaking editing data 14 based on the platemaking editing data 14 and the conversion rule 32. The output image is arranged on the proof can, and the platemaking editing data 14 is proofed using the proof can.

The platemaking editing data creation unit 10 inputs the platemaking editing data 14 to the separation data creation unit 20. The separation data creation unit 20 creates the separation data 22 from the platemaking editing data 14.

The separation data creation unit 20 inputs the separation data 22 to the platemaking apparatus 210. The platemaking apparatus 210 manufactures the plates based on the separation data 22. The plates manufactured are mounted on the printing machine 200 to print the image corresponding to the platemaking editing data 14.

By the can manufacturing system 100 shown in Fig. 4, it is possible to manufacture a proof can in which the ink colors of the image printed on the can surface by the printing machine 200 are reproduced. Also, since the conversion is performed on the platemaking editing data 14 to output the image to be arranged on the can surface of the proof can, the proof can having high reproducibility of the ink colors of the platemaking editing data 14 can be manufactured.

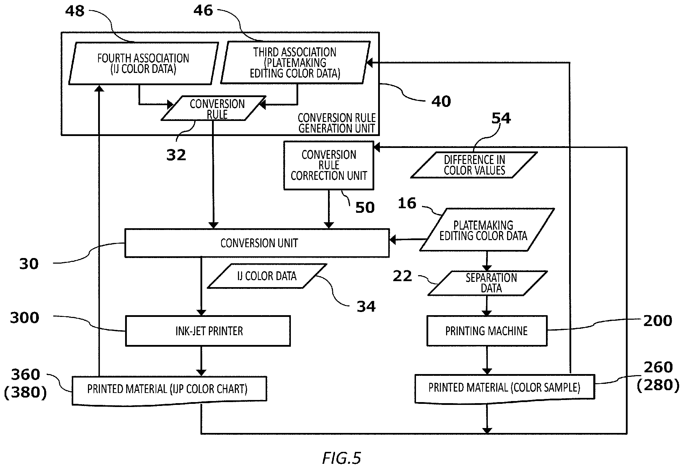

Fig. 5 shows a specific example of data processing by a conversion rule generation unit 40 and a conversion rule correction unit 50 in the embodiment shown in Fig. 4.

Firstly, the printing machine 200 prints the printed material 260 in the ink colors of the printing machine 200 based on the separation data 22. Then, color coordinates in the color space of the colors of the printed material 260 are acquired by a colorimeter. In addition, the printed material 360 is printed in the ink colors of the ink-jet printer 300. Then, color coordinates in the color space of the colors of the printed material 360 are acquired by a colorimeter. Here, the printed material 260 may be a color sample 280 consisting of color patches obtained by printing the ink colors of the printing machine 200 on the metal material by the printing machine 200. The printed material 360 may be an IJP color chart 380 obtained by printing the ink colors of the ink-jet printer 300 on a transparency film and superposing the printed transparency film on a metal material. For the material or color coordinates of the printed material, the above descriptions may be applied as they are.

Then, the conversion rule generation unit 40 associates the ink colors of the platemaking editing data 14 with the color coordinates in the color space of the colors of the printed material 260 to acquire platemaking editing color data 16 which includes the third association 46 between the ink colors of the platemaking editing data 14 and the color coordinates in the color space of the colors of the printed material 260. Also, the conversion rule generation unit 40 associates the ink colors of the ink-jet printer 300 with the color coordinates in the color space of the colors of the printed material 360 to acquire the IJ color data 34 which includes the fourth association 48 between the ink colors of the ink-jet printer 300 and the color coordinates in the color space of the colors of the printed material 360.

The conversion rule generation unit 40 generates a conversion rule 32 based on the platemaking editing color data 16 and the IJ color data 34.

The conversion rule generation unit 40 inputs the generated conversion rule 32 to the conversion unit 30.

The separation data creation unit 20 creates the separation data 22 from the platemaking editing data 14. The printing machine 200 acquires the separation data 22 and manufactures a color sample 280 consisting of the color patches of the ink colors of the printing machine 200 printed on a metal material.

In addition, the conversion unit 30 acquires the colors of the platemaking editing color data 16 and converts them into the colors of the IJ color data 34 according to the conversion rule 32. The conversion unit 30 outputs the converted colors of the IJ color data 34 to the ink-jet printer 300.

The ink-jet printer 300 manufactures an IJP color chart 380 by printing, on a transparency film, the ink colors of the ink-jet printer 300 corresponding to the colors of the IJ color data 34 and superposing the printed transparency film on a metal material.

Note that, the IJP color chart 380 may be the IJP color chart 380 obtained by printing the ink colors of the ink-jet printer 300 corresponding to the IJ color data 34 on a metal material by the ink-jet printer 300.

Note that, for the explanation of the metal material or the film, the above descriptions may be applied as they are.

Then, the color values of the color sample 280 and the IJP color chart 380 are measured by the colorimeter. The conversion rule correction unit 50 acquires the difference 54 between the color values of the color sample 280 and the color values of the IJP color chart 380.

If the difference 54 in the color values is greater than a predetermined value, the conversion rule correction unit 50 corrects the conversion rule 32 so that the difference 54 in the color values becomes equal to or less than the predetermined value.

By the data processing shown in Fig. 5 according to the can manufacturing system 100, the conversion rule 32 with high reproducibility can be acquired based on the actual measured values even if the printing machine 200 and the ink-jet printer 300 each have different ink colors or different output characteristics or even if the metal materials and film materials of the printed can and proof can each represent the ink colors differently. Accordingly, it is possible to manufacture a proof can in which the ink colors of the image printed by the printing machine 200 on the can surface are represented with high reproducibility.

Now, the can manufacturing method will be described. The can manufacturing method may include at least a step of creating separation data and a step of manufacturing a proof can.

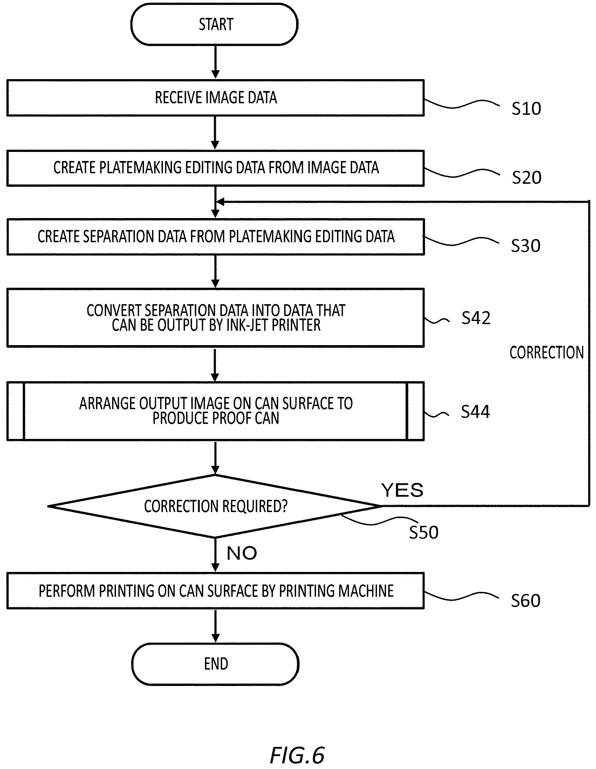

Fig. 6 shows an example of a manufacturing flow of a can manufacturing method in the present embodiment. In the can manufacturing method of the present embodiment, a can can be manufactured by performing processing of S10 to S60 in Fig. 6. Note that, for convenience of description, the processing of S10 to S60 will be described in order; however, at least some processing may be performed in parallel, and steps may be interchanged to be performed within a range not deviating from the spirit of the present invention. Also, some steps may be omitted. For example, S30 corresponds to the step of creating separation data, and S44 corresponds to the step of manufacturing a proof can.

Firstly in S10, the image data 12 is received. The image data 12 may include image data 12 created by a computer 400 or may include image data 12 read by a device such as a camera or a scanner. Also, the image data 12 may be received via a storage medium that is readable by a computer 400, such as electronic storage medium, magnetic storage medium, optical storage medium, electromagnetic storage medium, semiconductor storage medium, or may be received via a communication line, such as the Internet. For example, the image data 12 may be PDF data, BMP data, JPG data or the like.

The image data 12 may include the colors selected from the color sample 60 that shows the ink colors of the printing machine 200. The color sample 60 may be a color sample that is printed on a metal plate to be used for a can. Alternatively, the color sample 60 may be a color sample that is created by performing printing directly on the can and then cutting it open.

Then, in S20, the platemaking editing data 14 is created from the image data 12. The platemaking editing data 14 may be created by performing editing tasks such as layout and color tone compensation on the image data 12. The platemaking editing data 14 may include data required to edit objects, for example, to arrange objects such as graphics and texts or to specify text font and colors.

The platemaking editing data 14 may be created by a person manually operating existing editing software. Preferable existing editing software is software for the packaging industry, including PackEdge (Esko), for example. Alternatively, the platemaking editing data 14 may be created from the image data 12 automatically by a computer.

Then, in S30, the separation data 22 is created in which the platemaking editing data 14 is separated for each ink color of the printing machine 200 that performs printing on the can surface. In S30, the platemaking editing data 14 may be decomposed according to plates to be used in the printing machine 200, and the separation data 22 which indicates a pattern of ink for each plate may be created. In addition, here the separation data 22 may be created by performing halftone screening to represent the light and shade of each ink color by a collection of halftone dots, on the pattern of ink for each plate.

The separation data 22 may be 1bitTIFF (Tagged Image File Format) data created for each ink color of the printing machine 200.

The separation data 22 may be created by a person manually operating existing editing software. Preferable existing editing software includes software RIP (Raster Image Processor) such as Imaging engine (Esko), for example. Alternatively, the separation data 22 may be created from the platemaking editing data 14 automatically by a computer.

Then, in S42, the separation data 22 is converted into data that can be output by the ink-jet printer 300 (also referred to as "IJ print data)). In S42, the IJ print data may be created by compositing the separation data 22 for each plate.

Specifically, firstly the color of each separation color data 24 may be converted into the color of the IJ color data 34 according to the conversion rule 32. When multiple pieces of the separation data 22 after the color conversion are placed on top of each other, some pixels have superimposed colors and others do not. For example, while a particular pixel has a superimposed color composed of ink of a spot color 1 and a spot color 2, another particular pixel is colored only by ink of spot color 1, in some cases.

For a pixel having a color that is represented by the superimposition of two or more plates in the printing machine 200, each of the two or more colors composing the color represented by the superimposition is converted into a color of IJ color data 34 according to the conversion rule 32, and the converted two or more colors of the IJ color data 34 are blended to generate the color of the superimposition.

For example, for the color represented by the superimposition of two or more plates, the colors of the separation color data 24 of those two or more plates may be converted into the colors of the IJ color data 34 according to the conversion rule 32, and the converted colors of the IJ color data 34 may be averaged to generate the color of the superimposition. As an example, the color represented by the superimposition of the ink color of the mixture of C77, M10, Y6, K8 and the ink color of the mixture ratio of C81, M44, Y0, K0 may be obtained by the ink color having the averaged ink mixture ratio of C79, M27, Y3, K4. Alternatively, two or more colors of the IJ color data 34 may be blended based on a predetermined blending rule to generate a blended ink color. The blending rule may be a lookup table provided by a user in advance or may be a mathematical expression.

For a pixel having no color represented by the superimposition of two or more plates in the printing machine 200, the converted color of the IJ color data 34 may be used as it is. After the blended colors are generated, compensation tasks such as adjustment of gain of the halftone dots or texts may be performed on the separation data 22 to create the IJ print data.

Accordingly, in the can manufacturing method of the present embodiment, the ink colors of the image printed on the can surface by the printing machine 200 can be reproduced in the image arranged on the surface of the proof can.

The IJ print data may be created by a person manually operating the existing editing software. The existing editing software may include Rosette Star Proof (Ueno corporation), for example. Alternatively, the IJ print data may be created from the separation data 22 automatically by a computer.

Then, in S44, the image is output by the ink-jet printer 300 based on the IJ print data, and the output image is arranged on the can surface to manufacture a proof can. Accordingly, based on the separation data 22 and the predetermined conversion rule 32, the image corresponding to the platemaking editing data 14 is printed by the ink-jet printer 300 and the proof can is obtained on which said image is arranged.

Then, in S50, the platemaking editing data 14 is proofed using the proof can manufactured. Proofing may be performed by comparing the color sample 60 of the colors selected on the image data 12 with the colors of the proof can. If it is determined in S50 that the platemaking editing data 14 needs to be corrected, the platemaking editing data 14 is corrected, and the steps from S30 are performed. If it is determined in S50 that no correction of the platemaking editing data 14 is needed, the process proceeds to S60.

Then, in S60, the printing plates are manufactured by the platemaking apparatus 210 based on the separation data 22, and printing is performed on the can surface by the printing machine 200. By performing the manufacturing flow shown in Fig. 6, the can having printing performed on its surface can be manufactured.

By the flow of the can manufacturing method shown in Fig. 6, it is possible to manufacture a proof can in which the ink colors of the image printed on the can surface by the printing machine 200 are reproduced. In addition, since the conversion of the separation data 22 is performed to output the image to be arranged on the can surface of the proof can, it is possible to manufacture a proof can in which the shape and arrangement of the halftone dots represented on the plates of the printing machine 200 are reproduced..

In addition, a proofing procedure which involves the ink-jet printer 300 can significantly reduce the time required for proofing of printed cans compared to the conventional can manufacturing method in which a proof can is manufactured by a printing machinery using printing plates. Accordingly, the period from order placement to delivery of printed cans can be significantly reduced, allowing for manufacturing small lots and multiple varieties of printed cans.

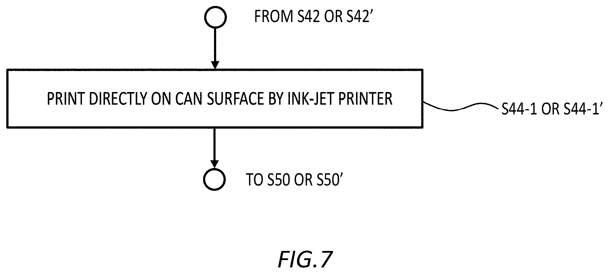

Fig. 7 shows a specific example of a can proofing step S44 in the can manufacturing method of the present embodiment. According to the can manufacturing method of the present embodiment shown in Fig. 6, in S44-1 as a step in S44, printing may be performed directly on the can surface by the ink-jet printer 300. Accordingly, the proof can with an image directly printed on its can surface by the ink-jet printer 300 is manufactured.

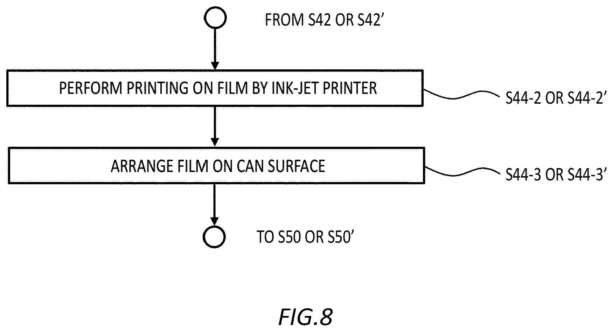

Fig. 8 shows a specific example of a can proofing step S44 in the can manufacturing method of the present embodiment. According to the can manufacturing method of the present embodiment shown in Fig. 6, firstly in S44-2 as a step in S44, an image is printed on a film by the ink-jet printer 300. For the explanation of the film, the above descriptions may be applied as they are.

Then, in S44-3, a proof can is manufactured by arranging, on the can surface, the film on which the image printed by the ink-jet printer 300 shown is formed. Accordingly, the proof can is manufactured which has the film arranged on its can surface, on which the image that is printed by the ink-jet printer 300 and that corresponds to the platemaking editing data 14 is formed. The film may be arranged on the can by pasting it thereto with an adhesive. Alternatively, the film may be wrapped around the can and both ends may be fixed by a tape. The film may be heat-shrunk to be fixed on the can.

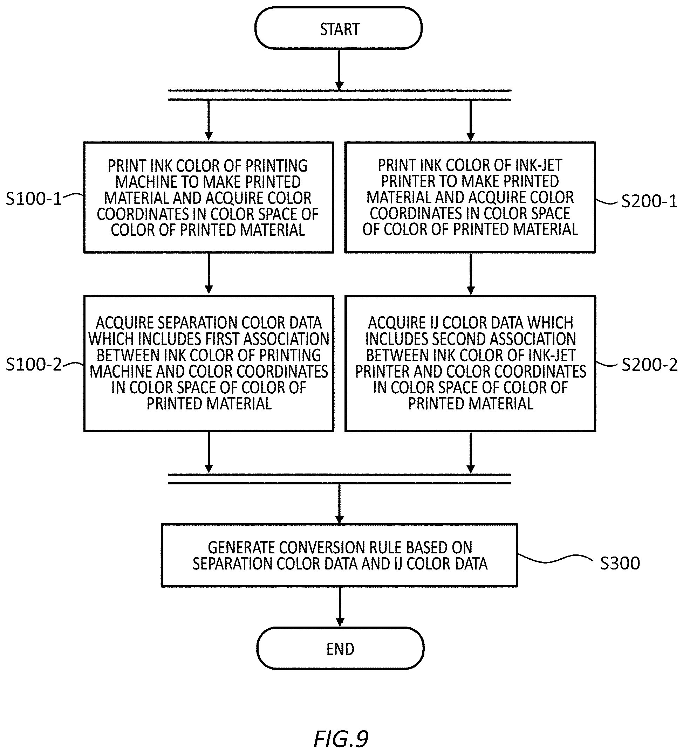

Fig. 9 shows an example of a generation flow of the conversion rule 32 in the can manufacturing method of the present embodiment. In the can manufacturing method of the embodiment shown in Fig. 6, the conversion rule 32 may be generated by performing the generation flow in Fig. 9. Note that, for convenience of description, the processing of S100-1 to S300 will be described in order; however, at least some processing may be performed in parallel, and steps may be interchanged to be performed within a range not deviating from the spirit of the present invention. Also, some steps may be omitted.

Firstly, in S100-1, the printed material 220 is printed in the ink colors of the printing machine 200, and the color coordinates in the color space of the colors of the printed material 220 are acquired. For the explanation of a material used for the printed material or the color coordinates, the above descriptions may be applied as they are.

Then, in S100-2, an association is made between the ink colors of the printing machine 200 and the color coordinates in the color space of the colors of the printed material 220 to acquire separation color data 24 which includes the first association 42 between the ink colors of the printing machine 200 and the color coordinates in the color space of the colors of the printed material 220.

Also, in S200-1, the printed material 320 is printed in the ink colors of the ink-jet printer 300, and the color coordinates in the color space of the colors of the printed material 320 are acquired. For the explanation of a material used for the printed material or the color coordinates, the above descriptions may be applied as they are.

Then, in S200-2, an association is made between the ink colors of the ink-jet printer 300 and the color coordinates in the color space of the colors of the printed material 320 to acquire IJ color data 34 which includes the second association 44 between the ink colors of the ink-jet printer 300 and the color coordinates in the color space of the colors of the printed material 320.

Then, in S300, the conversion rule 32 is generated based on the separation color data 24 and the IJ color data 34. The conversion rule 32 may be generated so that the difference between a color value of the printed material 220 and a color value of the printed material 320 falls within a predetermined range. For example, the conversion rule 32 may be generated so that the color difference between the printed material 220 and the printed material 320 is ΔE₀₀ = 4 or less. Alternatively, the conversion rule 32 may be generated so that ΔE₀₀ = 3 or less is achieved. Here, ΔE₀₀ is an indicator of the color difference specified by JISZ 8781-6: 2017 and ISO/CIE11664-6: 2014 (E).

By the generation flow of the conversion rule 32 shown in Fig. 9, the conversion rule 32 with high reproducibility can be acquired based on the actual measured values even if the printing machine 200 and the ink-jet printer 300 each have different ink colors or different output characteristics or even if the metal materials and film materials of the printed can and the proof can each represent the ink colors differently. Accordingly, it is possible to manufacture a proof can in which the ink colors of the image printed by the printing machine 200 on the can surface are represented with high reproducibility.

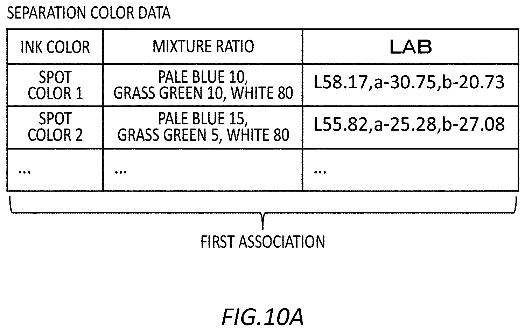

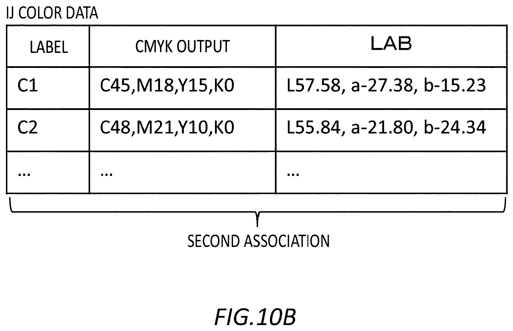

Fig. 10A shows a specific example of the first association 42 in the can manufacturing method of the present embodiment. In addition, Fig. 10B shows a specific example of the second association 44 in the can manufacturing method of the present embodiment.

The separation color data 24 may include, as color data of the ink colors used in the printing machine 200, the data to identify the ink colors (that is, the colors of the separation color data 24), such as a name of the ink color or a mixture ratio of ink. The first association 42 may provide an association, for each ink color used in the printing machine 200, between the data to identify the ink color and the color coordinates in the color space of the color of the printed material 220.

The IJ color data 34 may include, as color data of the ink colors of the ink-jet printer 300, the data to identify the ink colors (that is, the colors of the IJ color data 34), such as a name of the ink color or a mixture ratio of ink. The second association 44 may provide an association, for each ink color used in the ink-jet printer 300, between the data to identify the ink color and the color coordinates in the color space of the color of the printed material 320.

Note that, for the explanation of the color coordinates of the printed material 220 and the printed material 320, the above descriptions about the color coordinates may be applied as they are.

For example, in S100-2 in Fig. 9, the first association may be provided between the spot color 1 and the color coordinates (L58.17, a-30.75, b-20.73) as shown in Fig. 10A, and in S200-2, the second association may be provided between C1 and the color coordinates (L57.58, a-27.38, b-15.23) as shown in Fig. 10B. In this case, the conversion rule to convert the spot color 1 into C1 may be generated in response to the fact that the color difference ΔE₀₀ between the spot color 1 and C1 is 2.92 in S300.

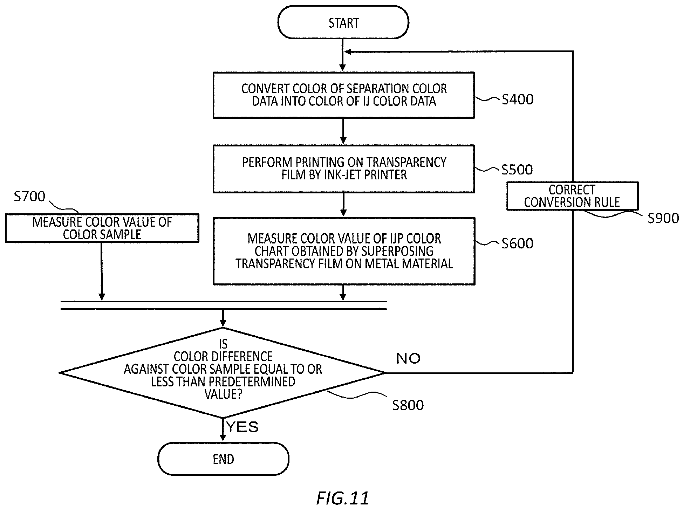

Fig. 11 shows an example of a correction flow of the conversion rule 32 in the can manufacturing method of the present embodiment. The conversion rule 32 in the can manufacturing method of the embodiment shown in Fig. 6 may be corrected by the correction flow in Fig. 11. Note that, for convenience of description, the processing of S400 to S900 will be described in order; however, at least some processing may be performed in parallel, and steps may be interchanged to be performed within a range not deviating from the spirit of the present invention. Also, some steps may be omitted.

Firstly, in S400, the color of the separation color data 24 is converted into the color of the IJ color data 34 according to the conversion rule 32. For example, the spot color 1 is converted into C1.

Then, in S500, the ink color of the ink-jet printer 300 (for example, the ink color of the mixture of L57.58, a-27.38, b-15.23) corresponding to the color of the IJ color data 34 (for example, C1) is printed on a transparency film by the ink-jet printer 300.

Then, in S600, the IJP color chart 340 is created by superposing the printed transparency film on a metal material, and its color value is measured.

In S700, the color sample 240 is created that consists of a color patch, printed on the metal material by the printing machine 200, of the ink color (for example, the spot color 1) of the printing machine 200 according to the colors of the separation color data 24, and its color value is measured.

Then, in S800, the comparison is made between the color value of the color sample 240 and the color value of the IJP color chart 340. If the difference in color values is greater than a predetermined value, the conversion rule 32 is corrected so that the difference in color values becomes equal to or less than the predetermined value, and the corrected conversion rule 32 is used to perform the steps from S400. For example, the predetermined difference in color values may be ΔE₀₀=4 or may be ΔE₀₀=3. If the difference in color values is equal to or less than the predetermined value, the correction of the conversion rule 32 may be ended.

The correction flow in Fig. 11 may be applied to the conversion rule 32 after the conversion rule 32 is generated by the generation flow shown in Fig. 9 and before it is used for the can manufacturing method in Fig. 6. Accordingly, the reproducibility of the conversion rule 32 can be improved depending on the metal material or the film material of the printed can or the proof can manufactured by the can manufacturing method.

The correction flow in Fig. 11 may be applied to the conversion rule 32 after it is started to be used for the can manufacturing method shown in Fig. 6. For example, in the can manufacturing method in Fig. 6, if the color difference is increased between the color of the proof can manufactured in S44 and the color in the color sample 60 or the color of the can on which printing is performed on its surface by the printing machine 200 in S60, the correction flow may be applied to the conversion rule 32. In addition, the correction flow in Fig. 11 may be periodically applied to the conversion rule 32, or the correction flow in Fig. 11 may be applied to the conversion rule 32 when a repair operation, a maintenance operation, lot change of the ink, or the like has occurred in the printing machine 200 or ink-jet printer 300. Accordingly, the reproducibility of the conversion rule 32 can be maintained.

By the correction flow of the conversion rule 32 shown in Fig. 11, the ink colors of the image printed on a can surface by the printing machine 200 can be represented on the proof can with high reproducibility.

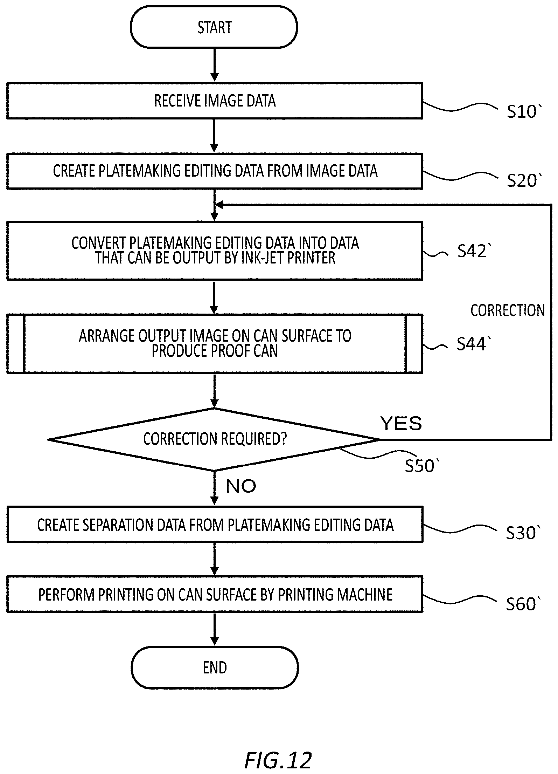

Fig. 12 shows a variation of the manufacturing flow of the can manufacturing method in the present embodiment. The can manufacturing method of the present embodiment is capable of manufacturing a can by performing processing of S10' to S60' in Fig. 12. Note that, for convenience of description, the processing of S10' to S60' will be described in order; however, at least some processing may be performed in parallel, and steps may be interchanged to be performed within a range not deviating from the spirit of the present invention. Also, some steps may be omitted. For example, S30' corresponds to the step of creating separation data, and S44' corresponds to the step of manufacturing a proof can.

Firstly in S10', the image data 12 is received. For the explanation of the image data 12, the above descriptions may be applied as they are.

Then, in S20', the platemaking editing data 14 is created from the image data 12. For the explanation of the platemaking editing data 14, the above descriptions may be applied as they are.

Then in S42', the platemaking editing data 14 is converted into the IJ print data.

Specifically, in S42', the colors of the platemaking editing color data 16 may be converted into the colors of the IJ color data 34 according to the conversion rule 32. Also, a color in the colors of the platemaking editing color data 16 that is an intermediate color among other colors of the platemaking editing color data 16 may be converted into the IJ color data 34 by performing the process such as error diffusion on the platemaking editing data 14.

Accordingly, in the can manufacturing method of the present embodiment, the ink colors of the image printed on the can surface by the printing machine 200 can be reproduced in the image arranged on the surface of the proof can.

The IJ print data may be created by a person manually operating the existing editing software. Existing editing software includes software RIP (Raster Image Processor), for example. Alternatively, the IJ print data may be created from the platemaking editing data 14 automatically by a computer.

Then, in S44', the image is output by the ink-jet printer 300 based on the IJ print data, and the output image is arranged on the can surface to manufacture a proof can. For the explanation of the can proofing step S44', the descriptions about Fig. 7 and Fig. 8 may be applied as they are. Accordingly, based on the platemaking editing data 14 and the predetermined conversion rule 32, the image corresponding to the platemaking editing data 14 is printed by the ink-jet printer 300 and the proof can is obtained on which said image is arranged.

Then, in S50', the platemaking editing data 14 is proofed using the proof can manufactured. For the explanation of the proofing step, the above descriptions may be applied as they are. If it is determined in S50' that the platemaking editing data 14 needs to be corrected, the platemaking editing data 14 is corrected, and the steps from S42' are performed. If it is determined in S50' that no correction of the platemaking editing data 14 is needed, the process proceeds to S30'.

Then, in S30', the separation data 22 is created from the platemaking editing data 14. In S30', the platemaking editing data 14 may be decomposed according to plates to be used in the printing machine 200, and the separation data 22 which indicates a pattern of ink for each plate may be created. In addition, here the separation data 22 may be created by performing halftone screening to represent the light and shade of each ink color by a collection of halftone dots, on the pattern of ink for each plate. For the explanation of the separation data 22, the above descriptions may be applied as they are.

Then, in S60', the printing plates are manufactured by the platemaking apparatus 210 based on the separation data 22, and printing is performed on the can surface by the printing machine 200. By performing the manufacturing flow shown in Fig. 12, the can with a print on its surface can be manufactured.

By the flow of the can manufacturing method shown in Fig. 12, the conversion rule 32 with high reproducibility can be acquired based on the actual measured values even if the printing machine 200 and the ink-jet printer 300 each have different ink colors or different output characteristics or even if the metal materials and film materials of the printed can and proof can each represent the ink colors differently. Accordingly, it is possible to manufacture a proof can in which the ink colors of the image printed by the printing machine 200 on the can surface are represented with high reproducibility.

In addition, a proofing procedure which involves the ink-jet printer 300 can significantly reduce the time required for proofing of printed cans compared to the conventional can manufacturing method in which a proof can is manufactured by a printing machinery using printing plates. Accordingly, the period from order placement to delivery of printed cans can be significantly reduced, allowing for manufacturing small lots and multiple varieties of printed cans.

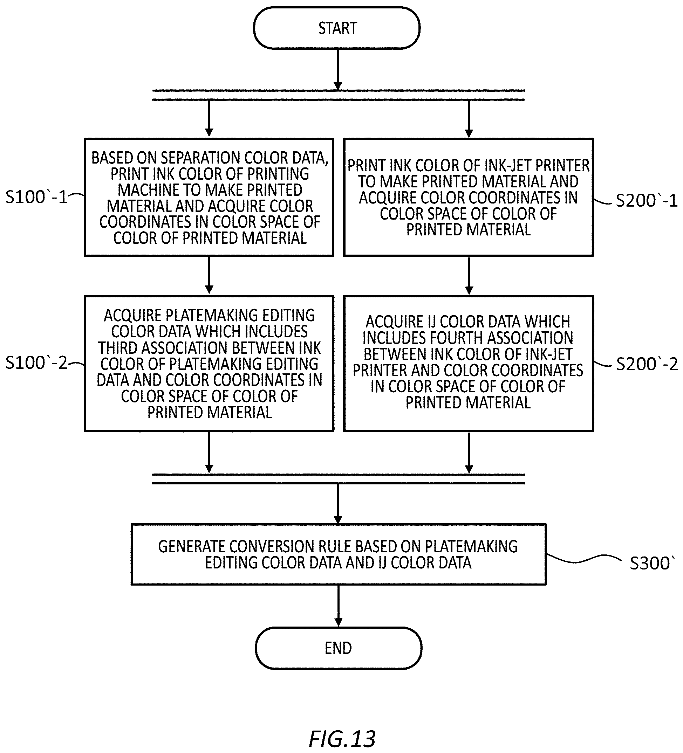

Fig. 13 shows an example of the generation flow of the conversion rule 32 in the can manufacturing method of the present embodiment. In the can manufacturing method of the embodiment shown in Fig. 12, the conversion rule 32 may be generated by performing the generation flow in Fig. 13. Note that, for convenience of description, the processing of S100'-1 to S300' will be described in order; however, at least some processing may be performed in parallel, and steps may be interchanged to be performed within a range not deviating from the spirit of the present invention. Also, some steps may be omitted.

Firstly in S100'-1, the printed material 260 is printed in the ink colors of the printing machine 200 based on the separation data 22, and the color coordinates in the color space of the colors of the printed material 260 are acquired. For the explanation of a material used for the printed material or the color coordinates, the above descriptions may be applied as they are.

Then, in S100'-2, an association is made between the ink colors of the platemaking editing data 14 and the color coordinates in the color space of the colors of the printed material 260 to acquire the platemaking editing color data 16 which includes the third association 46 between the ink colors of the platemaking editing data 14 and the color coordinates in the color space of the colors of the printed material 260.

Also, in S200'-1, the printed material 360 is printed in the ink colors of the ink-jet printer 300, and the color coordinates in the color space of the colors of the printed material 360 are acquired. For the explanation of a material used for the printed material or the color coordinates, the above descriptions may be applied as they are.

Then, in S200'-2, an association is made between the ink colors of the ink-jet printer 300 and the color coordinates in the color space of the colors of the printed material 360 to acquire the IJ color data 34 which includes the fourth association 48 between the ink colors of the ink-jet printer 300 and the color coordinates in the color space of the colors of the printed material 360.

Then, in S300', the conversion rule 32 is generated based on the platemaking editing color data 16 and the IJ color data 34. The conversion rule 32 may be generated so that the difference between a color value of the printed material 260 and a color value of the printed material 360 falls within a predetermined range. For example, the conversion rule 32 may be generated so that the color difference between the printed material 260 and the printed material 360 is ΔE₀₀ = 4 or less. Alternatively, the conversion rule 32 may be generated so that ΔE₀₀ = 3 or less is achieved.

By the generation flow of the conversion rule 32 shown in Fig. 13, it is possible to acquire the conversion rule of the ink colors that is suitable for the ink colors or output characteristics of the printing machine 200 and ink-jet printer 300, as well as for the metal materials or film materials of the printed can and the proof can, allowing manufacturing of a proof can in which the ink colors of the image printed by the printing machine 200 on the can surface are represented with high reproducibility.

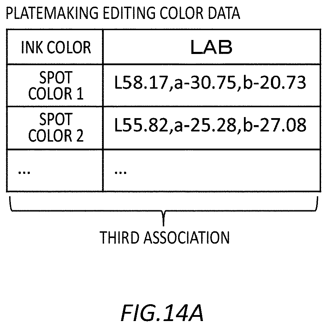

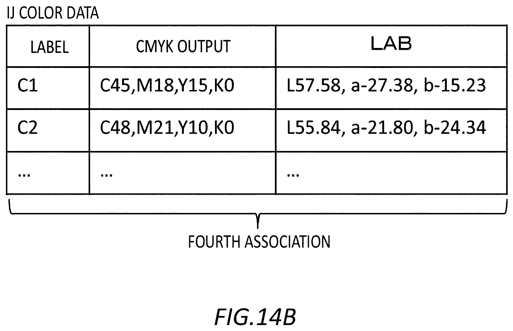

Fig. 14A shows a specific example of the third association 46 in the can manufacturing method of the present embodiment. In addition, Fig. 14B shows a specific example of the fourth association 48 in the can manufacturing method of the present embodiment.

The platemaking editing color data 16 may include, as color data of the ink colors of the platemaking editing data 14, the data to identify the ink colors (that is, the colors of the platemaking editing color data 16), such as a name of the ink color. The third association 46 may provide an association, for each ink color of the platemaking editing data 14, between the data to identify the ink color and the color coordinates in the color space of the color of the printed material 260.

The IJ color data 34 may include, as color data of the ink colors of the ink-jet printer 300, the data to identify the ink colors (that is, the colors of the IJ color data 34), such as a name of the ink color or a mixture ratio of ink. The fourth association 48 may provide an association, for each ink color used in the ink-jet printer 300, between the data to identify the ink color and the color coordinates in the color space of the color of the printed material 360.

For the explanation of the color coordinates of the printed material 260 and the printed material 360, the above descriptions may be applied as they are.

For example, in S100'-2 in Fig. 13, the third association may be provided between the spot color 2 and the color coordinates (L55.82, a-25.28, b-27.08) as shown in Fig. 14A, and in S200'-2, the fourth association may be provided between C2 and the color coordinates (L55.84, a-21.80, b-24.34) as shown in Fig. 14B. In this case, the conversion rule to convert the spot color 2 into C2 may be generated in response to the fact that the color difference ΔE₀₀ between the spot color 2 and C2 is 1.77 in S300'.

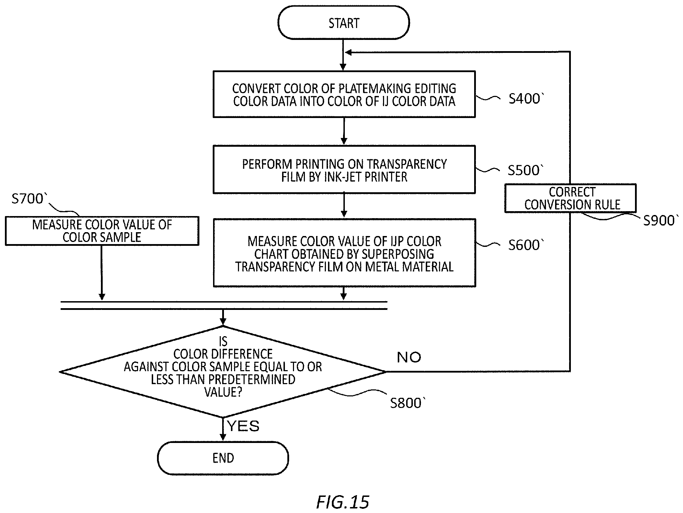

Fig. 15 shows an example of a correction flow of the conversion rule 32 in the can manufacturing method of the present embodiment. The conversion rule 32 used in the can manufacturing method of the embodiment shown in Fig. 12 may be corrected by the correction flow in Fig. 15. Note that, for convenience of description, the processing of S400' to S900' will be described in order; however, at least some processing may be performed in parallel, and steps may be interchanged to be performed within a range not deviating from the spirit of the present invention. Also, some steps may be omitted.

Firstly, in S400', the color of the platemaking editing color data 16 is converted into the color of the IJ color data 34 according to the conversion rule 32. For example, the spot color 1 is converted into C1.

Then, in S500', the ink color of the ink-jet printer 300 (for example, the ink color of the mixture of L55.84, a-21.80, b-24.34) corresponding to the color of the IJ color data 34 (for example, C2) is printed on a transparency film by the ink-jet printer 300.

Then, in S600', the IJP color chart 380 is created by superposing the printed transparency film on a metal material, and its color value is measured.

In S700', the color sample 280 is created that consists of a color patch, printed on a metal material by the printing machine 200, of the ink color (for example, the spot color 2) of the printing machine 200 according to the colors of the separation color data 24, and its color value is measured.

Then, in S800', the comparison is made between the color value of the color sample 280 and the color value of the IJP color chart 380. If the difference in color values is greater than a predetermined value, the conversion rule 32 is corrected so that the difference in color values becomes equal to or less than the predetermined value, and the corrected conversion rule 32 is used to perform the steps from S400'. For example, the predetermined difference in color values may be ΔE₀₀=4 or may be ΔE₀₀=3. If the difference in color values is equal to or less than the predetermined value, the correction of the conversion rule 32 may be ended.

The correction flow in Fig. 15 may be applied to the conversion rule 32 after the conversion rule 32 is generated by the generation flow shown in Fig. 13 and before it is used for the can manufacturing method in Fig. 12. Accordingly, the reproducibility of the conversion rule 32 can be improved depending on the metal material or the film material of the printed can or the proof can manufactured by the can manufacturing method.

The correction flow in Fig. 15 may be applied to the conversion rule 32 after it is started to be used for the can manufacturing method shown in Fig. 12. For example, in the can manufacturing method in Fig. 12, if the color difference is increased between the color of the proof can manufactured in S44' and the color in the color sample 60 or the color of the can on which printing has been performed on its surface by the printing machine 200 in S60', the correction flow may be applied to the conversion rule 32. In addition, the correction flow in Fig. 15 may be periodically applied to the conversion rule 32, or the correction flow in Fig. 15 may be applied to the conversion rule 32 when a repair operation, a maintenance operation, lot change of the ink, or the like has occurred in the printing machine 200 or ink-jet printer 300. Accordingly, the reproducibility of the conversion rule 32 can be maintained.

By the correction flow of the conversion rule 32 shown in Fig. 15, the ink colors of the image printed on a can surface by the printing machine 200 can be represented on the proof can with high reproducibility.

Various embodiments of the present invention may be described with reference to flowcharts and block diagrams whose blocks may represent (1) steps of processes in which operations are performed or (2) sections of apparatuses responsible for performing operations. Certain steps and sections may be implemented by dedicated circuitry, programmable circuitry supplied with computer readable instructions stored on computer readable medium, and/or processors supplied with computer readable instructions stored on computer readable medium. Dedicated circuitry may include digital and/or analog hardware circuits, and may include integrated circuits (IC) and/or discrete circuits. The programmable circuitry may include a reconfigurable hardware circuit including logical AND, logical OR, logical XOR, logical NAND, logical NOR, and other logical operations, a memory element such as a flip-flop, a register, a field programmable gate array (FPGA) and a programmable logic array (PLA), and the like.

A computer readable medium may include any tangible device that can store instructions to be executed by a suitable device, and as a result, the computer readable medium having instructions stored thereon includes an article of manufacture including instructions which can be executed in order to create means for performing operations specified in the flowcharts or block diagrams. Examples of the computer readable medium may include an electronic storage medium, a magnetic storage medium, an optical storage medium, an electromagnetic storage medium, a semiconductor storage medium, and the like. More specific examples of the computer readable medium may include a floppy (registered trademark) disk, a diskette, a hard disk, a random access memory (RAM), a read-only memory (ROM), an erasable programmable read-only memory (EPROM or flash memory), an electrically erasable programmable read-only memory (EEPROM), a static random access memory (SRAM), a compact disc read-only memory (CD-ROM), a digital versatile disk (DVD), a Blu-ray (registered trademark) disk, a memory stick, an integrated circuit card, and the like.

The computer readable instruction may include: an assembler instruction, an instruction-set-architecture (ISA) instruction; a machine instruction; a machine dependent instruction; a microcode; a firmware instruction; state-setting data; or either a source code or an object code written in any combination of one or more programming languages, including an object oriented programming language such as Smalltalk (registered trademark), JAVA (registered trademark), C++, or the like; and a conventional procedural programming language such as a "C" programming language or a similar programming language.

Computer readable instructions may be provided to a processor of a general-purpose computer, special purpose computer, or other programmable data processing apparatuses, or to programmable circuitry, locally or via a local area network (LAN), wide area network (WAN) such as the Internet, or the like, to execute the computer readable instructions to create means for performing operations specified in the flowcharts or block diagrams. An example of the processor includes a computer processor, processing unit, microprocessor, digital signal processor, controller, microcontroller, or the like.

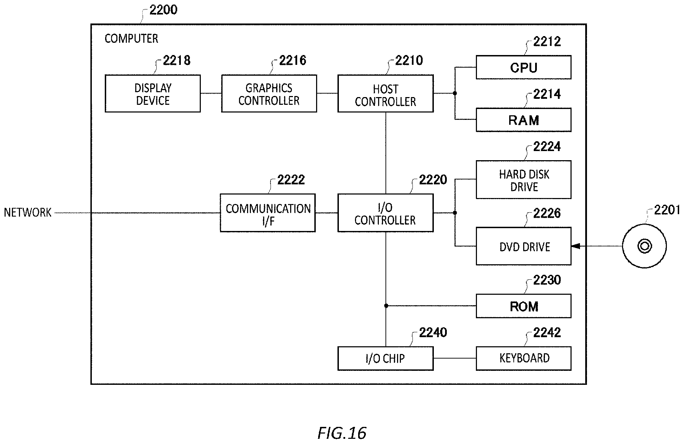

Fig. 16 illustrates an example of a computer 2200 in which a plurality of aspects of the present invention may be embodied entirely or partially. A program installed in the computer 2200 can cause the computer 2200 to function as an operation associated with the apparatuses according to the embodiments of the present invention or as one or more sections of the apparatuses, or can cause the operation or the one or more sections to be executed, and/or can cause the computer 2200 to execute a process according to the embodiments of the present invention or a step of the process. Such programs may be executed by a CPU 2212 to cause the computer 2200 to perform certain operations associated with some or all of the blocks in the flowcharts and block diagrams described in the present specification.

The computer 2200 according to the present embodiment includes the CPU 2212, a RAM 2214, a graphics controller 2216, and a display device 2218, which are mutually connected by a host controller 2210. The computer 2200 also includes input/output units such as a communication interface 2222, a hard disk drive 2224, a DVD-ROM drive 2226, and an IC card drive, which are connected to the host controller 2210 via an input/output controller 2220. The computer also includes legacy input/output units such as a ROM 2230 and a keyboard 2242, which are connected to the input/output controller 2220 via an input/output chip 2240.

The CPU 2212 operates according to programs stored in the ROM 2230 and the RAM 2214, thereby controlling each unit. The graphics controller 2216 acquires image data generated by the CPU 2212 on a frame buffer or the like provided in the RAM 2214 or in itself, and causes the image data to be displayed on the display device 2218.

The communication interface 2222 communicates with other electronic devices via a network. The hard disk drive 2224 stores programs and data used by the CPU 2212 in the computer 2200. The DVD-ROM drive 2226 reads the programs or the data from the DVD-ROM 2201, and provides the hard disk drive 2224 with the programs or the data via the RAM 2214. The IC card drive reads the programs and the data from the IC card, and/or writes the programs and the data to the IC card.

The ROM 2230 stores therein boot programs and the like executed by the computer 2200 at the time of activation, and/or programs that depend on the hardware of the computer 2200. The input/output chip 2240 may also connect various input/output units to the input/output controller 2220 via a parallel port, a serial port, a keyboard port, a mouse port, and the like.

The program is provided by a computer readable medium such as the DVD-ROM 2201 or the IC card. The program is read from a computer readable medium, installed in the hard disk drive 2224, the RAM 2214, or the ROM 2230 which are also examples of the computer readable medium, and executed by the CPU 2212. The information processing described in these programs is read by the computer 2200 and provides cooperation between the programs and the above described various types of hardware resources. The apparatus or method may be configured by implementing operations or processing of information according to use of the computer 2200.

For example, in a case where communication is performed between the computer 2200 and an external device, the CPU 2212 may execute a communication program loaded in the RAM 2214 and instruct the communication interface 2222 to perform communication processing on the basis of processing described in the communication program. Under the control of the CPU 2212, the communication interface 2222 reads transmission data stored in a transmission buffer processing area provided in a recording medium such as the RAM 2214, the hard disk drive 2224, the DVD-ROM 2201, or the IC card, transmits the read transmission data to the network, or writes reception data received from the network in a reception buffer processing area or the like provided on the recording medium.

In addition, the CPU 2212 may cause the RAM 2214 to read all or a necessary part of a file or database stored in an external recording medium such as the hard disk drive 2224, the DVD-ROM drive 2226 (DVD-ROM 2201), the IC card, or the like, and may execute various types of processing on data on the RAM 2214. Next, the CPU 2212 writes back the processed data to the external recording medium.

Various types of information such as various types of programs, data, tables, and databases may be stored in a recording medium and subjected to information processing. The CPU 2212 may execute various types of processing on the data read from the RAM 2214 to write back a result to the RAM 2214, the processing being described throughout the present disclosure, specified by instruction sequences of the programs, and including various types of operations, information processing, condition determinations, conditional branching, unconditional branching, information retrievals/replacements, or the like. In addition, the CPU 2212 may search for an entry matching the condition whose attribute value of the first attribute is designated, from among the plurality of entries, and read the attribute value of the second attribute stored in the entry, thereby acquiring the attribute value of the second attribute associated with the first attribute satisfying the predetermined condition.

The programs or software modules described above may be stored in a computer readable medium on or near the computer 2200. In addition, a recording medium such as a hard disk or a RAM provided in a server system connected to a dedicated communication network or the Internet can be used as a computer readable medium, thereby providing a program to the computer 2200 via the network.

The operations, procedures, steps, and steps of each process performed by an apparatus, system, program, and method shown in the claims, embodiments, or diagrams can be performed in any order as long as the order is not indicated by "prior to," "before," or the like and as long as the output from a previous process is not used in a later process. Even if the process flow is described using phrases such as "firstly" or "then" in the claims, embodiments, or diagrams, it does not necessarily mean that the process must be performed in this order.

### EXPLANATION OF REFERENCES

10: platemaking editing data creation unit;
12: image data;
14: platemaking editing data;
16: platemaking editing color data;
20: separation data creation unit;
22: separation data;
24: separation color data;
30: conversion unit;
32: conversion rule;
34: IJ color data;
40: conversion rule generation unit;
42: first association;
44: second association;
46: third association;
48: fourth association;
50: conversion rule correction unit;
52: difference in color values;
54: difference in color values;
60: color sample;
100: can manufacturing system;
200: printing machine;
210: platemaking apparatus;
220: printed material;
240: color sample;
260: printed material;
280: color sample;
300: ink-jet printer;
320: printed material;
340: IJP color chart
360: printed material;
380: IJP color chart;
400: computer;
2200: computer;
2201: DVD-ROM;
2210: host controller;
2212: CPU;
2214: RAM;
2216: graphics controller;
2218: display device;
2220: input/output controller;
2222: communication interface;
2224: hard disk drive;
2226: DVD-ROM drive;
2230: ROM;
2240: input/output chip;
2242: keyboard.

## Claims

1. A can manufacturing method, comprising:
creating (S30) separation data (22) by separating platemaking editing data (14) for each ink color of a printing machine (200) that performs printing on a surface of a can; and
manufacturing a proof can by outputting an image corresponding to the platemaking editing data by an ink-jet printer (300) based on the platemaking editing data or the separation data and a predetermined conversion rule (30), and arranging the image on a can surface,
wherein
the conversion rule has a rule to reproduce, by ink of the ink-jet printer, the ink color of the printing machine printed based on the separation data, wherein the can manufacturing method further comprises:
creating the platemaking editing data from an image data,
**characterized in that**
the image data includes a color selected from a color sample showing the ink color of the printing machine, and
the color sample is a color sample that is printed on a metal plate to be used for the can.

2. The can manufacturing method according to claim 1, wherein
the manufacturing a proof can is manufacturing a proof can by outputting the image corresponding to the platemaking editing data by the ink-jet printer based on the separation data and the conversion rule, and arranging the image on the can surface, and
the conversion rule is a rule to convert a color of separation color data which is color data of the ink color of the printing machine into a color of IJ color data which is color data of an ink color of the ink-jet printer.

3. The can manufacturing method according to claim 2, wherein
the separation color data includes a first association between the ink color of the printing machine and color coordinates in a color space of a color of a printed material printed in the ink color of the printing machine,
the IJ color data includes a second association between the ink color of the ink-jet printer and color coordinates in a color space of a color of a printed material printed in the ink color of the ink-jet printer, and
the method further comprises generating the conversion rule based on the separation color data and the IJ color data.

4. The can manufacturing method according to claim 3, further comprising:
measuring a color value of a color sample that consists of a color patch obtained by printing, on a metal material by the printing machine, the ink color of the printing machine according to a color of the separation color data;
measuring a color value of an IJP color chart obtained by converting a color of the separation color data into a color of the IJ color data according to the conversion rule, printing, on a transparency film by the ink-jet printer, the ink color of the ink-jet printer corresponding to the color of the IJ color data, and superposing, on a metal material, the transparency film after printing; and
if a difference between the color value of the color sample and the color value of the IJP color chart is greater than a predetermined value, correcting the conversion rule so that the difference in the color values becomes equal to or less than the predetermined value.

5. The can manufacturing method according to claim 1, wherein
the manufacturing the proof can is manufacturing the proof can by outputting the image corresponding to the platemaking editing data by the ink-jet printer based on the platemaking editing data and the conversion rule, and arranging the image on the can surface, and
the conversion rule is a rule to convert a color of platemaking editing color data which is color data of an ink color of the platemaking editing data into a color of IJ color data which is color data of an ink color of the ink-jet printer.

6. The can manufacturing method according to claim 5, wherein
the platemaking editing color data includes a third association between the ink color of the platemaking editing data and color coordinates in a color space of a color of a printed material printed in the ink color of the printing machine based on the separation data,
the IJ color data includes a fourth association between the ink color of the ink-jet printer and color coordinates in a color space of a color of a printed material printed in the ink color of the ink-jet printer, and
the method further comprises generating the conversion rule based on the platemaking editing color data and the IJ color data.

7. The can manufacturing method according to claim 6, further comprising:
measuring a color value of a color sample that consists of a color patch obtained by printing, on a metal material by the printing machine, the ink color of the printing machine;
measuring a color value of an IJP color chart obtained by converting a color of the platemaking editing color data into a color of the IJ color data according to the conversion rule, printing, on a transparency film by the ink-jet printer, the ink color of the ink-jet printer corresponding to the color of the IJ color data, and superposing, on a metal material, the transparency film after printing; and
if a difference between the color value of the color sample and the color value of the IJP color chart is greater than a predetermined value, correcting the conversion rule so that the difference in the color values becomes equal to or less than the predetermined value.

8. The can manufacturing method according to any one of claims 1 to 7, further comprising:
proofing the platemaking editing data using the proof can, wherein
the proofing includes comparing the color sample of the color selected on the image data with a color on the proof can.

9. A can manufacturing system, comprising:
a printing machine which performs printing on a surface of a can;
a separation data creation unit which creates separation data by separating platemaking editing data for each ink color of the printing machine;
an ink-jet printer which outputs an image corresponding to the platemaking editing data based on the platemaking editing data or the separation data and a predetermined conversion rule to manufacture a proof can on which the image is arranged on a can surface, wherein
the conversion rule has a rule to reproduce, by ink of the ink-jet printer, the ink color of the printing machine printed based on the separation data, wherein the can manufacturing system further comprises:
a platemaking editing data creation unit which creates the platemaking editing data from an image data, and further comprises:
a color sample that shows the ink color of the printing machine,
**characterized in that**
the color sample is a color sample that is printed on a metal plate to be used for the can, and
the image data includes a color selected from the color sample.

10. The can manufacturing system (100) according to claim 9, wherein
the ink-jet printer outputs an image corresponding to the platemaking editing data based on the separation data and the conversion rule,
the conversion rule is a rule to convert a color of separation color data which is color data of the ink color of the printing machine into a color of IJ color data which is color data of an ink color of the ink-jet printer, and
the separation color data includes a first association between the ink color of the printing machine and color coordinates in a color space of a color of a printed material printed in the ink color of the printing machine,
the IJ color data includes a second association between the ink color of the ink-jet printer and color coordinates in a color space of a color of a printed material printed in the ink color of the ink-jet printer, and
the system further comprises a conversion rule generation unit which generates the conversion rule based on the separation color data and the IJ color data.

11. The can manufacturing system according to claim 10, further comprising:
a color sample that consists of a color patch obtained by printing, on a metal material by the printing machine, the ink color of the printing machine according to a color of the separation color data;
an IJP color chart obtained by converting a color of the separation color data into a color of the IJ color data according to the conversion rule, printing, on a transparency film by the ink-jet printer, the ink color of the ink-jet printer corresponding to the color of the IJ color data, and superposing, on a metal material, the transparency film after printing; and
a conversion rule correction unit which measures a color value of the color sample and a color value of the IJP color chart, and if a difference between the color value of the color sample and the color value of the IJP color chart is greater than a predetermined value, corrects the conversion rule so that the difference in the color values becomes equal to or less than the predetermined value.

12. The can manufacturing system according to claim 9, wherein
the ink-jet printer outputs an image corresponding to the platemaking editing data based on the platemaking editing data and the conversion rule,
the conversion rule is a rule to convert a color of platemaking editing color data which is color data of an ink color of the platemaking editing data into a color of IJ color data which is color data of an ink color of the ink-jet printer,
the platemaking editing color data includes a third association between the ink color of the platemaking editing data and color coordinates in a color space of a color of a printed material printed in the ink color of the printing machine based on the separation data,
the IJ color data includes a fourth association between the ink color of the ink-jet printer and color coordinates in a color space of a color of a printed material printed in the ink color of the ink-jet printer, and
the system further comprises a conversion rule generation unit which generates the conversion rule based on the platemaking editing color data and the IJ color data.

13. The can manufacturing system according to claim 12, further comprising:
a color sample that consists of a color patch obtained by printing, on a metal material by the printing machine, the ink color of the printing machine;
an IJP color chart obtained by converting a color of the platemaking editing color data into a color of the IJ color data according to the conversion rule, printing, on a transparency film by the ink-jet printer, the ink color of the ink-jet printer corresponding to the color of the IJ color data, and superposing, on a metal material, the transparency film after printing; and
a conversion rule correction unit which measures a color value of the color sample and a color value of the IJP color chart, and if a difference between the color value of the color sample and the color value of the IJP color chart is greater than a predetermined value, corrects the conversion rule so that the difference in the color values becomes equal to or less than the predetermined value.

## Patentansprüche

1. Dosenherstellungsverfahren, das Folgendes umfasst:
Erstellen (S30) von Separationsdaten (22) durch Separieren von Plattenherstellungs-Editierdaten (14) für jede Tintenfarbe einer Druckmaschine (200), die das Drucken auf einer Oberfläche einer Dose durchführt; und
Herstellen einer Probedose durch Ausgeben eines Bildes, das den Plattenherstellungs-Editierdaten entspricht, durch einen Tintenstrahldrucker (300) basierend auf den Plattenherstellungs-Editierdaten oder den Separationsdaten und einer vorgegebenen Konvertierungsregel (30), und Anordnen des Bildes auf einer Dosenoberfläche, wobei
die Konvertierungsregel eine Regel zur Reproduktion der Tintenfarbe der Druckmaschine, die basierend auf den Separationsdaten gedruckt wird, durch die Tinte des Tintenstrahldruckers aufweist, wobei das Dosenherstellungsverfahren ferner umfasst:
Erstellen der Plattenherstellungs-Editierdaten aus Bilddaten, **dadurch gekennzeichnet, dass**
die Bilddaten eine Farbe beinhalten, die aus einem Farbmuster ausgewählt wird, das die Tintenfarbe der Druckmaschine zeigt, und
das Farbmuster ein Farbmuster ist, das auf eine Metallplatte gedruckt ist, die für die Dose verwendet wird.

2. Dosenherstellungsverfahren nach Anspruch 1, wobei
das Herstellen einer Probedose das Herstellen einer Probedose durch Ausgeben des Bildes, das den Plattenherstellungs-Editierdaten entspricht, durch den Tintenstrahldrucker basierend auf den Separationsdaten und der Konvertierungsregel, und das Anordnen des Bildes auf der Dosenoberfläche ist, und
die Konvertierungsregel eine Regel zur Konvertierung einer Farbe von Separationsfarbdaten, welche Farbdaten der Tintenfarbe der Druckmaschine sind, in eine Farbe von IJ-Farbdaten ist, welche Farbdaten einer Tintenfarbe des Tintenstrahldruckers sind.

3. Dosenherstellungsverfahren nach Anspruch 2, wobei
die Separationsfarbdaten eine erste Zuordnung zwischen der Tintenfarbe der Druckmaschine und Farbkoordinaten in einem Farbraum einer Farbe eines mit der Tintenfarbe der Druckmaschine bedruckten Materials beinhalten,
die IJ-Farbdaten eine zweite Zuordnung zwischen der Tintenfarbe des Tintenstrahldruckers und Farbkoordinaten in einem Farbraum einer Farbe eines mit der Tintenfarbe der Druckmaschine bedruckten Materials beinhalten, und
das Verfahren ferner das Erzeugen der Konvertierungsregel basierend auf den Separationsfarbdaten und den IJ-Farbdaten umfasst.

4. Dosenherstellungsverfahren nach Anspruch 3, ferner umfassend:
Messen eines Farbwerts eines Farbmusters, das aus einem Farbfeld besteht, das durch Drucken, auf ein Metallmaterial durch die Druckmaschine, der Tintenfarbe der Druckmaschine gemäß einer Farbe der Separationsfarbdaten erhalten wird;
Messen eines Farbwerts einer IJP-Farbkarte, die durch Konvertieren einer Farbe der Separationsfarbdaten in eine Farbe der IJ-Farbdaten gemäß der Konvertierungsregel, Drucken der Tintenfarbe des Tintenstrahldruckers, die der Farbe der IJ-Farbdaten entspricht, auf eine transparente Folie durch den Tintenstrahldrucker und Auflegen der transparenten Folie nach dem Drucken auf ein Metallmaterial erhalten wird; und
wenn eine Differenz zwischen dem Farbwert des Farbmusters und dem Farbwert der IJP-Farbkarte größer als ein vorgegebener Wert ist, Korrigieren der Konvertierungsregel, so dass die Differenz der Farbwerte gleich oder kleiner als der vorgegebene Wert wird.

5. Dosenherstellungsverfahren nach Anspruch 1, wobei
das Herstellen der Probedose das Herstellen der Probedose durch Ausgeben des Bildes, das den Plattenherstellungs-Editierdaten entspricht, durch den Tintenstrahldrucker basierend auf den Plattenherstellungs-Editierdaten und der Konvertierungsregel, und das Anordnen des Bildes auf der Dosenoberfläche ist, und
die Konvertierungsregel eine Regel zur Konvertierung einer Farbe der Plattenherstellungs-Editierfarbdaten, welche Farbdaten einer Tintenfarbe der Plattenherstellungs-Editierdaten sind, in eine Farbe von IJ-Farbdaten ist, welche Farbdaten einer Tintenfarbe des Tintenstrahldruckers sind.

6. Dosenherstellungsverfahren nach Anspruch 5, wobei
die Plattenherstellungs-Editierfarbdaten eine dritte Zuordnung zwischen der Tintenfarbe der Plattenherstellungs-Editierdaten und Farbkoordinaten in einem Farbraum einer Farbe eines bedruckten Materials beinhalten, das in der Tintenfarbe der Druckmaschine basierend auf den Separationsdaten bedruckt wird,
die IJ-Farbdaten eine vierte Zuordnung zwischen der Tintenfarbe des Tintenstrahldruckers und Farbkoordinaten in einem Farbraum einer Farbe eines mit der Tintenfarbe der Druckmaschine bedruckten Materials beinhalten, und
das Verfahren ferner das Erzeugen der Konvertierungsregel basierend auf den Plattenherstellungs-Editierfarbdaten und den IJ-Farbdaten umfasst.

7. Dosenherstellungsverfahren nach Anspruch 6, ferner umfassend:
Messen eines Farbwerts eines Farbmusters, das aus einem Farbfeld besteht, das durch Drucken, auf ein Metallmaterial durch die Druckmaschine, der Tintenfarbe der Druckmaschine erhalten wird;
Messen eines Farbwerts einer IJP-Farbkarte, die durch Konvertieren einer Farbe der Plattenherstellungs-Editierfarbdaten in eine Farbe der IJ-Farbdaten gemäß der Konvertierungsregel, Drucken der Tintenfarbe des Tintenstrahldruckers Bearbeiten der Farbe der IJ-Farbdaten entspricht, auf eine transparente Folie durch den Tintenstrahldrucker und Auflegen der transparenten Folie nach dem Drucken auf ein Metallmaterial erhalten wird; und
wenn eine Differenz zwischen dem Farbwert des Farbmusters und dem Farbwert der IJP-Farbkarte größer als ein vorgegebener Wert ist, Korrigieren der Konvertierungsregel, so dass die Differenz der Farbwerte gleich oder kleiner als der vorgegebene Wert wird.

8. Dosenherstellungsverfahren nach einem der Ansprüche 1 bis 7, ferner umfassend:
Prüfen der Plattenherstellungs-Editierdaten unter Verwendung der Probedose, wobei
das Prüfen das Vergleichen des Farbmusters der in den Bilddaten ausgewählten Farbe mit einer Farbe auf der Probedose beinhaltet.

9. Dosenherstellungssystem, das Folgendes umfasst:
eine Druckmaschine, die Drucken auf einer Oberfläche einer Dose durchführt;
eine Separationsdaten-Erstellungseinheit, die Separationsdaten durch Separieren von Plattenherstellungs-Editierdaten für jede Tintenfarbe der Druckmaschine erstellt;
einen Tintenstrahldrucker, der ein Bild entsprechend den Plattenherstellungs-Editierdaten basierend auf den Plattenherstellungs-Editierdaten oder den Separationsdaten und einer vorgegebenen Konvertierungsregel ausgibt, um eine Probedose herzustellen, auf der das Bild auf einer Dosenoberfläche angeordnet ist, wobei
die Konvertierungsregel eine Regel zur Reproduktion der Tintenfarbe der Druckmaschine, die basierend auf den Separationsdaten gedruckt wird, durch die Tinte des Tintenstrahldruckers aufweist, wobei das Dosenherstellungssystem ferner umfasst:
eine Erstellungseinheit für Plattenherstellungs-Editierdaten, welche die Plattenherstellungs-Editierdaten aus Bilddaten erstellt, und ferner umfassend:
ein Farbmuster, das die Tintenfarbe der Druckmaschine zeigt, **dadurch gekennzeichnet, dass**
das Farbmuster ein Farbmuster ist, das auf eine Metallplatte gedruckt ist, die für die Dose verwendet wird, und
die Bilddaten eine aus dem Farbmuster ausgewählte Farbe beinhalten.

10. Dosenherstellungssystem (100) nach Anspruch 9, wobei
der Tintenstrahldrucker basierend auf den Separationsdaten und der Konvertierungsregel ein Bild ausgibt, das den Plattenherstellungs-Editierdaten entspricht,
die Konvertierungsregel eine Regel zur Konvertierung einer Farbe von Separationsfarbdaten, welche Farbdaten der Tintenfarbe der Druckmaschine sind, in eine Farbe von IJ-Farbdaten ist, welche Farbdaten einer Tintenfarbe des Tintenstrahldruckers sind, und
die Separationsfarbdaten eine erste Zuordnung zwischen der Tintenfarbe der Druckmaschine und Farbkoordinaten in einem Farbraum einer Farbe eines mit der Tintenfarbe der Druckmaschine bedruckten Materials beinhalten,
die IJ-Farbdaten eine zweite Zuordnung zwischen der Tintenfarbe des Tintenstrahldruckers und Farbkoordinaten in einem Farbraum einer Farbe eines mit der Tintenfarbe der Druckmaschine bedruckten Materials beinhalten, und
das System ferner eine Konvertierungsregel-Erzeugungseinheit umfasst, welche die Konvertierungsregel basierend auf den Separationsfarbdaten und den IJ-Farbdaten erzeugt.

11. Dosenherstellungssystem nach Anspruch 10, ferner umfassend:
ein Farbmuster, das aus einem Farbfeld besteht, das durch Drucken, auf ein Metallmaterial durch die Druckmaschine, der Tintenfarbe der Druckmaschine gemäß einer Farbe der Separationsfarbdaten erhalten wird;
eine IJP-Farbkarte, die durch Konvertieren einer Farbe der Separationsfarbdaten in eine Farbe der IJ-Farbdaten gemäß der Konvertierungsregel, Drucken der Tintenfarbe des Tintenstrahldruckers, die der Farbe der IJ-Farbdaten entspricht, auf eine transparente Folie durch den Tintenstrahldrucker und Auflegen der transparenten Folie nach dem Drucken auf ein Metallmaterial erhalten wird; und
eine Konvertierungsregel-Korrektureinheit, die einen Farbwert des Farbmusters und einen Farbwert der IJP-Farbkarte misst und, wenn eine Differenz zwischen dem Farbwert des Farbmusters und dem Farbwert der IJP-Farbkarte größer als ein vorgegebener Wert ist, die Konvertierungsregel so korrigiert, dass die Differenz der Farbwerte gleich oder kleiner als der vorgegebene Wert wird.

12. Dosenherstellungssystem nach Anspruch 9, wobei
der Tintenstrahldrucker basierend auf den Plattenherstellungs-Editierdaten und der Konvertierungsregel ein Bild ausgibt, das den Plattenherstellungs-Editierdaten entspricht,
die Konvertierungsregel eine Regel zur Konvertierung einer Farbe der Plattenherstellungs-Editierfarbdaten, welche Farbdaten einer Tintenfarbe der Plattenherstellungs-Editierdaten sind, in eine Farbe von IJ-Farbdaten ist, welche Farbdaten einer Tintenfarbe des Tintenstrahldruckers sind,
die Plattenherstellungs-Editierfarbdaten eine dritte Zuordnung zwischen der Tintenfarbe der Plattenherstellungs-Editierdaten und Farbkoordinaten in einem Farbraum einer Farbe eines bedruckten Materials beinhalten, das in der Tintenfarbe der Druckmaschine basierend auf den Separationsdaten bedruckt wird,
die IJ-Farbdaten eine vierte Zuordnung zwischen der Tintenfarbe des Tintenstrahldruckers und Farbkoordinaten in einem Farbraum einer Farbe eines mit der Tintenfarbe der Druckmaschine bedruckten Materials beinhalten, und
das System ferner eine Konvertierungsregel-Erzeugungseinheit umfasst, welche die Konvertierungsregel basierend auf den Plattenherstellungs-Editierfarbdaten und den IJ-Farbdaten erzeugt.

13. Dosenherstellungssystem nach Anspruch 12, ferner umfassend:
ein Farbmuster, das aus einem Farbfeld besteht, das durch Drucken, auf ein Metallmaterial durch die Druckmaschine, der Tintenfarbe der Druckmaschine erhalten wird;
eine IJP-Farbkarte, die durch Konvertieren einer Farbe der Plattenherstellungs-Editierfarbdaten in eine Farbe der IJ-Farbdaten gemäß der Konvertierungsregel, Drucken der Tintenfarbe des Tintenstrahldruckers, Bearbeiten Farbe der IJ-Farbdaten entspricht, auf eine transparente Folie durch den Tintenstrahldrucker und Auflegen der transparenten Folie nach dem Drucken auf ein Metallmaterial erhalten wird; und
eine Konvertierungsregel-Korrektureinheit, die einen Farbwert des Farbmusters und einen Farbwert der IJP-Farbkarte misst und, wenn eine Differenz zwischen dem Farbwert des Farbmusters und dem Farbwert der IJP-Farbkarte größer als ein vorgegebener Wert ist, die Konvertierungsregel so korrigiert, dass die Differenz der Farbwerte gleich oder kleiner als der vorgegebene Wert wird.

## Revendications

1. Procédé de fabrication de boîte métallique comprenant les étapes consistant à :
créer (S30) des données de séparation (22) en séparant les données d'édition de fabrication de plaque (14) pour chaque couleur d'encre d'une machine d'impression (200) qui effectue une impression sur une surface d'une boîte métallique ; et
fabriquer une boîte métallique de vérification en délivrant en sortie une image correspondant aux données d'édition de fabrication de plaque par une imprimante à jet d'encre (300) sur la base des données d'édition de fabrication de plaque ou des données de séparation et d'une règle de conversion prédéterminée (30), et agencer l'image sur une surface de boîte métallique, dans lequel
la règle de conversion a une règle pour reproduire, par l'intermédiaire de l'encre de l'imprimante à jet d'encre, la couleur d'encre de la machine d'impression imprimée sur la base des données de séparation, dans lequel le procédé de fabrication de boîte métallique comprend en outre les étapes consistant à :
créer les données d'édition de fabrication de plaque à partir de données d'image, **caractérisé en ce que**
les données d'image comprennent une couleur sélectionnée à partir d'un échantillon de couleur montrant la couleur de l'encre de la machine d'impression, et
l'échantillon de couleur est un échantillon de couleur qui est imprimé sur une plaque métallique à utiliser pour la boîte métallique.

2. Procédé de fabrication de boîte métallique selon la revendication 1, dans lequel
la fabrication d'une boîte métallique de vérification consiste à fabriquer une boîte métallique de vérification en délivrant en sortie l'image correspondant aux données d'édition de fabrication de plaque par l'imprimante à jet d'encre sur la base des données de séparation et de la règle de conversion, et à agencer l'image sur la surface de la boîte, et
la règle de conversion est une règle pour convertir une couleur de données de couleur de séparation qui sont des données de couleur de la couleur d'encre de la machine d'impression en une couleur de données de couleur IJ qui sont des données de couleur d'une couleur d'encre de l'imprimante à jet d'encre.

3. Procédé de fabrication de boîte métallique selon la revendication 2, dans lequel
les données de couleur de séparation comprennent une première association entre la couleur de l'encre de la machine d'impression et des coordonnées de couleur dans un espace de couleur d'une couleur d'un matériau imprimé qui est imprimé dans la couleur de l'encre de la machine d'impression,
les données de couleur IJ comprennent une deuxième association entre la couleur d'encre de l'imprimante à jet d'encre et les coordonnées de couleur dans un espace de couleur d'une couleur d'un matériau imprimé qui est imprimé dans la couleur d'encre de l'imprimante à jet d'encre, et
le procédé comprend en outre la génération de la règle de conversion sur la base des données de couleur de séparation et des données de couleur IJ.

4. Procédé de fabrication de boîte métallique selon la revendication 3, comprenant en outre les étapes consistant à :
mesurer une valeur de couleur d'un échantillon de couleur qui consiste en une pastille de couleur obtenue par impression, sur un matériau métallique par l'intermédiaire de la machine d'impression, de la couleur d'encre de la machine d'impression selon une couleur des données de couleur de séparation ;
mesurer une valeur de couleur d'un nuancier IP obtenue en convertissant une couleur des données de couleur de séparation en une couleur des données de couleur IJ selon la règle de conversion, imprimer, sur un film de transparence par l'intermédiaire de l'imprimante à jet d'encre, la couleur d'encre de l'imprimante à jet d'encre correspondant à la couleur des données de couleur IJ, et superposer, sur un matériau métallique, le film de transparence après impression ; et
si une différence entre la valeur de couleur de l'échantillon de couleur et la valeur de couleur du nuancier IJP est supérieure à une valeur prédéterminée, corriger la règle de conversion de sorte que la différence entre les valeurs de couleur devienne égale ou inférieure à la valeur prédéterminée.

5. Procédé de fabrication de boîte métallique selon la revendication 1, dans lequel
la fabrication de la boîte métallique de vérification consiste à fabriquer la boîte métallique de vérification en délivrant en sortie l'image correspondant aux données d'édition de fabrication de plaque par l'imprimante à jet d'encre sur la base des données d'édition de fabrication de plaque et de la règle de conversion, et à agencer l'image sur la surface de la boîte, et
la règle de conversion est une règle pour convertir une couleur de données de couleur d'édition de fabrication de plaque qui sont des données de couleur d'une couleur d'encre des données d'édition de fabrication de plaque en une couleur de données de couleur IJ qui sont des données de couleur d'une couleur d'encre de l'imprimante à jet d'encre.

6. Procédé de fabrication de boîte métallique selon la revendication 5, dans lequel
les données de couleur d'édition de fabrication de plaque comprennent une troisième association entre la couleur d'encre des données d'édition de fabrication de plaque et des coordonnées de couleur dans un espace de couleur d'une couleur d'un matériau imprimé qui est imprimé dans la couleur d'encre de la machine d'impression sur la base des données de séparation,
les données de couleur IJ comprennent une quatrième association entre la couleur d'encre de l'imprimante à jet d'encre et les coordonnées de couleur dans un espace de couleur d'une couleur d'un matériau imprimé qui est imprimé dans la couleur d'encre de l'imprimante à jet d'encre, et
le procédé comprend en outre une génération de la règle de conversion sur la base des données de couleur d'édition de fabrication de plaque et des données de couleur IJ.

7. Procédé de fabrication de boîte métallique selon la revendication 6, comprenant en outre les étapes consistant à :
mesurer une valeur de couleur d'un échantillon de couleur qui consiste en une pastille de couleur obtenue par impression, sur un matériau métallique par l'intermédiaire de la machine d'impression, de la couleur d'encre de la machine d'impression ;
mesurer une valeur de couleur d'un nuancier IP obtenue en convertissant une couleur des données de couleur d'édition de fabrication de plaque en une couleur des données de couleur IJ selon la règle de conversion, imprimer, sur un film de transparence par l'intermédiaire de l'imprimante à jet d'encre, la couleur d'encre de l'imprimante à jet d'encre correspondant à la couleur des données de couleur IJ, et superposer, sur un matériau métallique, le film de transparence après impression ; et
si une différence entre la valeur de couleur de l'échantillon de couleur et la valeur de couleur du nuancier IJP est supérieure à une valeur prédéterminée, corriger la règle de conversion de sorte que la différence entre les valeurs de couleur devienne égale ou inférieure à la valeur prédéterminée.

8. Procédé de fabrication de boîte métallique selon l'une quelconque des revendications 1 à 7, comprenant en outre l'étape consistant à :
vérifier des données d'édition de fabrication de plaque à l'aide de la boîte métallique de vérification, dans lequel
la vérification comprend une comparaison de l'échantillon de couleur de la couleur sélectionnée sur les données d'image avec une couleur sur la boîte de vérification.

9. Système de fabrication de boîtes métallique, comprenant :
une machine d'impression qui effectue une impression sur une surface d'une boîte métallique ;
une unité de création de données de séparation qui crée des données de séparation en séparant des données d'édition de fabrication de plaque pour chaque couleur d'encre de la machine d'impression ;
une imprimante à jet d'encre qui délivre en sortie une image correspondant aux données d'édition de fabrication de plaque sur la base des données d'édition de fabrication de plaque ou des données de séparation et d'une règle de conversion prédéterminée pour fabriquer une boîte métallique de vérification sur laquelle l'image est disposée sur une surface de boîte métallique, dans lequel
la règle de conversion présente une règle pour reproduire, par l'intermédiaire de l'encre de l'imprimante à jet d'encre, la couleur d'encre de la machine d'impression imprimée sur la base des données de séparation, dans lequel le système de fabrication de boîte métallique comprend en outre :
une unité de création de données d'édition de fabrication de plaque qui crée les données d'édition de fabrication de plaque à partir de données d'image, et comprend en outre :
un échantillon de couleur qui montre la couleur de l'encre de la machine d'impression, **caractérisé en ce que**
l'échantillon de couleur est un échantillon de couleur qui est imprimé sur une plaque métallique à utiliser pour la boîte métallique, et
les données d'image comprennent une couleur sélectionnée à partir de l'échantillon de couleur.

10. Système de fabrication de boîte métallique (100) selon la revendication 9, dans lequel
l'imprimante à jet d'encre délivre en sortie une image correspondant aux données d'édition de fabrication de plaque sur la base des données de séparation et de la règle de conversion,
la règle de conversion est une règle pour convertir une couleur de données de couleur de séparation qui sont des données de couleur de la couleur d'encre de la machine d'impression en une couleur de données de couleur IJ qui sont des données de couleur d'une couleur d'encre de l'imprimante à jet d'encre, et
les données de couleur de séparation comprennent une première association entre la couleur de l'encre de la machine d'impression et des coordonnées de couleur dans un espace de couleur d'une couleur d'un matériau imprimé qui est imprimé dans la couleur de l'encre de la machine d'impression,
les données de couleur IJ comprennent une deuxième association entre la couleur d'encre de l'imprimante à jet d'encre et les coordonnées de couleur dans un espace de couleur d'une couleur d'un matériau imprimé qui est imprimé dans la couleur d'encre de l'imprimante à jet d'encre, et
le système comprend en outre une unité de génération de règle de conversion qui génère la règle de conversion sur la base des données de couleur de séparation et des données de couleur IJ.

11. Système de fabrication de boîte métallique selon la revendication 10, comprenant en outre :
un échantillon de couleur qui consiste en une pastille de couleur obtenue par impression, sur un matériau métallique par l'intermédiaire de la machine d'impression, de la couleur d'encre de la machine d'impression selon une couleur des données de couleur de séparation ;
un nuancier IJP obtenu en convertissant une couleur des données de couleur de séparation en une couleur des données de couleur IJ selon la règle de conversion, en imprimant, sur un film de transparence par l'intermédiaire de l'imprimante à jet d'encre, la couleur d'encre de l'imprimante à jet d'encre correspondant à la couleur des données de couleur IJ, et en superposant, sur un matériau métallique, le film de transparence après impression ; et
une unité de correction de règle de conversion qui mesure une valeur de couleur de l'échantillon de couleur et une valeur de couleur du nuancier IJP, et si une différence entre la valeur de couleur de l'échantillon de couleur et la valeur de couleur du nuancier IJP est supérieure à une valeur prédéterminée, corrige la règle de conversion de sorte que la différence entre les valeurs de couleur devienne égale ou inférieure à la valeur prédéterminée.

12. Système de fabrication de boîtes métallique selon la revendication 9, dans lequel
l'imprimante à jet d'encre délivre en sortie une image correspondant aux données d'édition de fabrication de plaque sur la base des données d'édition de fabrication de plaque et de la règle de conversion,
la règle de conversion est une règle pour convertir une couleur de données de couleur d'édition de fabrication de plaque qui sont des données de couleur d'une couleur d'encre des données d'édition de fabrication de plaque en une couleur de données de couleur IJ qui sont des données de couleur d'une couleur d'encre de l'imprimante à jet d'encre,
les données de couleur d'édition de fabrication de plaque comprennent une troisième association entre la couleur d'encre des données d'édition de fabrication de plaque et des coordonnées de couleur dans un espace de couleur d'une couleur d'un matériau imprimé qui est imprimé dans la couleur d'encre de la machine d'impression sur la base des données de séparation,
les données de couleur IJ comprennent une quatrième association entre la couleur d'encre de l'imprimante à jet d'encre et les coordonnées de couleur dans un espace de couleur d'une couleur d'un matériau imprimé qui est imprimé dans la couleur d'encre de l'imprimante à jet d'encre, et
le système comprend en outre une unité de génération de règle de conversion qui génère la règle de conversion sur la base des données de couleur d'édition de fabrication de plaque et des données de couleur IJ.

13. Système de fabrication de boîte métallique selon la revendication 12, comprenant en outre :
un échantillon de couleur qui consiste en une pastille de couleur obtenue par impression, sur un matériau métallique par l'intermédiaire de la machine d'impression, de la couleur d'encre de la machine d'impression ;
un nuancier IJP obtenu en convertissant une couleur des données de couleur d'édition de fabrication de plaque en une couleur des données de couleur IJ selon la règle de conversion, en imprimant, sur un film de transparence par l'intermédiaire de l'imprimante à jet d'encre, la couleur d'encre de l'imprimante à jet d'encre correspondant à la couleur des données de couleur IJ, et en superposant, sur un matériau métallique, le film de transparence après impression ; et
une unité de correction de règle de conversion qui mesure une valeur de couleur de l'échantillon de couleur et une valeur de couleur du nuancier IJP, et si une différence entre la valeur de couleur de l'échantillon de couleur et la valeur de couleur du nuancier IJP est supérieure à une valeur prédéterminée, corrige la règle de conversion de sorte que la différence entre les valeurs de couleur devienne égale ou inférieure à la valeur prédéterminée.
